# EUROPEAN PATENT APPLICATION

(11) **EP 4 369 690 A1**
(43) Date of publication of application: **15.05.2024**
(21) Application number: 22855095.0
(22) Date of filing: 27.06.2022
(51) Int. Cl.: H04L 69/06, H04L 69/04, H04L 45/00, H04L 12/46

(54) **METHOD AND APPARATUS FOR TRANSMITTING NETWORK LAYER READABLE INFORMATION, DEVICE, SYSTEM, AND MEDIUM**

(30) Priority: 13.08.2021 CN 202110932977; 03.11.2021 CN 202111296433
(71) Applicant: Huawei Technologies Co., Ltd., Shenzhen, Guangdong 518129 (CN)
(72) Inventor: HUANG, Yang, Shenzhen, Guangdong 518129 (CN); WANG, Haibo, Shenzhen, Guangdong 518129 (CN)
(74) Representative: Pfenning, Meinig & Partner mbB
(86) International application number: PCT/CN2022/101596
(87) International publication number: WO 2023/016110

(57) **Abstract**

This application discloses a method, an apparatus, a device, and a system for transmitting network layer reachability information, and a medium, and pertains to the communication field. The method includes: obtaining a border gateway protocol BGP message, where the BGP message includes first NLRI that is for advertising a first route, the first NLRI includes a first field set and first indication information, the first field set carries necessary routing information of the first route, and the first indication information indicates that the first NLRI does not include a first field in a second field set, where each field in the second field set carries optional routing information of the first route, and the second field set does not include the first indication information; and sending the BGP message to a second communication apparatus. This application can improve route transmission efficiency.

## Description

This application claims priority to Chinese Patent Application No. 202110932977.7, filed on August 13, 2021 and entitled "METHOD, DEVICE, AND SYSTEM FOR COMPRESSING ROUTING PACKET LENGTH", which is incorporated herein by reference in its entirety. In addition, this application claims priority to Chinese Patent Application No. 202111296433.2, filed on November 3, 2021 and entitled "METHOD, APPARATUS, DEVICE, AND SYSTEM FOR TRANSMITTING NETWORK LAYER REACHABILITY INFORMATION, AND MEDIUM", which is incorporated herein by reference in its entirety.

### TECHNICAL FIELD

This application relates to the field of communication technologies, and in particular, to a method, an apparatus, a device, and a system for transmitting network layer reachability information, and a medium.

### BACKGROUND

A virtual private network (virtual private network, VPN) is a control plane protocol technology based on a border gateway protocol (border gateway protocol, BGP). It can transmit routing information through network layer reachability information (network layer reachable information, NLRI).

Some network devices in the VPN carry hundreds of thousands or even millions of routes and establish many BGP neighbors. For example, these network devices may be autonomous system border routers (autonomous system boundary router, ASBR) and route reflectors (route reflector, RR). These network devices may generate a BGP packet, where the BGP packet includes a plurality of pieces of NLRI. Each piece of NLRI includes one piece of routing information, and send the BGP packet to the BGP neighbor, to implement a route exchange.

For the NLRI in the BGP packet, a length of the NLRI is long, but a total length of the BGP packet is limited. As a result, a quantity of pieces of NLRI that can be carried in the BGP packet is limited, affecting route transmission efficiency.

### SUMMARY

This application provides a method, an apparatus, a system, and a storage medium for transmitting network layer reachability information, to improve route transmission efficiency. The technical solutions are as follows:

According to a first aspect, this application provides a method for transmitting network layer reachability information NLRI. The method is performed by a first communication apparatus. In the method, a border gateway protocol BGP message is obtained. The BGP message includes first NLRI that is for advertising a first route. The first NLRI includes a first field set and first indication information. The first field set carries necessary routing information of the first route, and the first indication information indicates that the first NLRI does not include a first field in a second field set. Each field in the second field set carries optional routing information of the first route. The second field set does not include the first indication information. The BGP message is sent to a second communication apparatus.

The first NLRI includes the first field set and the first indication information. Each field in the first field set carries the necessary routing information of the first route, to enable the second communication apparatus to obtain the necessary routing information of the first route by parsing the first NLRI, and ensure that the second communication apparatus can normally use the first route. Because the first indication information indicates that second NLRI does not include the first field in the second field set, and each field in the second field set carries the optical routing information of the first route, a length of the first NLRI is reduced, so that a quantity of pieces of NLRI included in the BGP message is increased, to increase a quantity of routes included in the BGP message, and improve route transmission efficiency.

Optionally, the first indication information further indicates that the first NLRI includes a second field in the second field set. In this way, when obtaining the first NLRI, the second communication apparatus can successfully parse a second field in the first NLRI based on the first indication information, so that the second communication apparatus can obtain some optional routing information of the first route from the second field.

Optionally, the first indication information includes a plurality of bits, and the first indication information indicates, in a bit mapping manner, that the first NLRI does not include the first field. The first field can be easily indicated in the bit mapping manner, and a process in which the second communication apparatus parses the first indication information can be simplified.

Optionally, the first indication information indicates, in an enumeration manner, that the first NLRI does not include the first field. The first field can be easily indicated in the enumeration manner, and a process in which the second communication apparatus parses the first indication information can be simplified.

Optionally, the BGP message includes a plurality of pieces of NLRI, and the plurality of pieces of NLRI include the first NLRI and the second NLRI. The BGP message includes a common information field and a plurality of dedicated information fields. The common information field carries same information of the plurality of pieces of NLRI, and the plurality of dedicated information fields are in a one-to-one correspondence with the plurality of pieces of NLRI. Each of the plurality of dedicated information fields carries information other than the same information of each of the plurality of pieces of NLRI.

The common information field carries the same information of the plurality of pieces of NLRI, and the dedicated information field corresponding to each piece of NLRI does not need to include the same information. In this way, a length of each dedicated information field is reduced, to enable a total length of the common information field and the plurality of dedicated information fields is less than a total length of the plurality of pieces of NLRI. In this way, the quantity of routes included in the BGP message is further increased, and the route transmission efficiency is improved.

Optionally, the second NLRI is for advertising a second route. The second NLRI includes a third field set and second indication information. The third field set carries necessary routing information of the second route, and the second indication information indicates that the second NLRI does not include a fourth field set. Each field in the fourth field set carries optional routing information of the second route. Because the second indication information indicates that the second NLRI does not include the fourth field set, a length of the second NLRI is reduced, and the quantity of pieces of NLRI included in the BGP message can be increased, to increase the quantity of routes included in the BGP message, thereby improving the route transmission efficiency.

Optionally, the BGP message includes third NLRI. The third NLRI includes the common information field and the dedicated information fields, and the plurality of pieces of NLRI are a plurality of pieces of sub-NLRI in the third NLRI. In this way, the common information field and the plurality of dedicated information fields are encapsulated in one piece of third NLRI, to simplify a structure of the BGP message.

Optionally, the first route is a first Ethernet virtual private network EVPN route, and the first NLRI is first EVPN NLRI.

Optionally, an encoding format of the first EVPN NLRI is different from an encoding format of EVPN NRLI defined in RFC 7432.

Optionally, the first EVPN NLRI includes a route type field, and the first EVPN route indicated by the route type field is:
a compressed media access control/internet protocol advertisement route MAC/IP Advertisement Route;
a compressed IP prefix route;
a compressed Ethernet auto-discovery route Ethernet Auto-discovery Route;
a compressed inclusive multicast Ethernet tag route Inclusive Multicast Ethernet Tag Route; or
a compressed Ethernet segment route Ethernet Segment Route.

Optionally, when the first EVPN route is the compressed MAC/IP advertisement route, the necessary routing information includes a route type, a specific routing information length, a route identifier, a MAC address length, a MAC address, a layer 2 multi-protocol label switching label MPLS label 1, and an IP address length.

Optionally, the necessary routing information further includes an internet protocol version 4 IPv4 address or an internet protocol version 6 IPv6 address.

Optionally, when the first EVPN route is the compressed MAC/IP advertisement route, the optional routing information includes an Ethernet segment identifier and an Ethernet tag identifier.

Optionally, the optional routing information further includes an MPLS label2.

Optionally, when the first EVPN route is the compressed IP prefix route, the necessary routing information includes a routing type, a specific routing information length, a route identifier, an IP prefix length, an IP prefix, and an MPLS label.

Optionally, the optional routing information includes an Ethernet segment identifier, an Ethernet tag identifier, and a gateway IP address.

According to a second aspect, this application provides a method for transmitting network layer reachability information NLRI. The method is performed by a first communication apparatus. In the method, a border gateway protocol BGP message is obtained. The BGP message includes first NLRI that is for advertising a first route. The first NLRI includes a first field set and first indication information. The first field set carries necessary routing information of the first route, and the first indication information indicates that the first NLRI does not include a second field set. Each field in the second field set carries optional routing information of the first route. The second field set does not include the first indication information. The BGP message is sent to a second communication apparatus.

The first NLRI includes the first field set and the first indication information. Each field in the first field set carries the necessary routing information of the first route, to enable the second communication apparatus to obtain the necessary routing information of the first route by parsing the first NLRI, and ensure that the second communication apparatus can normally use the first route. Because the first indication information indicates that the first NLRI does not include the second field set, and each field in the second field set carries the optical routing information of the first route, a length of the first NLRI is greatly reduced, so that a quantity of pieces of NLRI included in the BGP message is increased, to increase a quantity of routes included in the BGP message, and improve route transmission efficiency.

Optionally, the first indication information includes a plurality of bits, and the first indication information indicates, in a bit mapping manner, that the first NLRI does not include each field in the second field set. Each field in the second field set can be easily indicated in the bit mapping manner, and a process in which the second communication apparatus parses the first indication information can be simplified.

Optionally, the first indication information indicates, in an enumeration manner, that the first NLRI does not include the second field set. Each field in the second field set can be easily indicated in the enumeration manner, and a process in which the second communication apparatus parses the first indication information can be simplified.

Optionally, the BGP message includes a plurality of pieces of NLRI, and the plurality of pieces of NLRI include the first NLRI and second NLRI. The BGP message includes a common information field and a plurality of dedicated information fields. The common information field carries same information of the plurality of pieces of NLRI, and the plurality of dedicated information fields are in a one-to-one correspondence with the plurality of pieces of NLRI. Each of the plurality of dedicated information fields carries information other than the same information of each of the plurality of pieces of NLRI.

The common information field carries the same information of the plurality of pieces of NLRI, and the dedicated information field corresponding to each piece of NLRI does not need to include the same information. In this way, a length of each dedicated information field is reduced, to enable a total length of the common information field and the plurality of dedicated information fields is less than a total length of the plurality of pieces of NLRI. In this way, the quantity of routes included in the BGP message is further increased, and the route transmission efficiency is improved.

Optionally, the BGP message includes third NLRI. The third NLRI includes the common information field and the dedicated information fields, and the plurality of pieces of NLRI are a plurality of pieces of sub-NLRI in the third NLRI. In this way, the common information field and the plurality of dedicated information fields are encapsulated in one piece of third NLRI, to simplify a structure of the BGP message.

Optionally, the first route is a first Ethernet virtual private network EVPN route, and the first NLRI is first EVPN NLRI.

Optionally, an encoding format of the first EVPN NLRI is different from an encoding format of EVPN NRLI defined in RFC 7432.

Optionally, the first EVPN NLRI includes a route type field, and the first EVPN route indicated by the route type field is:
a compressed media access control/internet protocol advertisement route MAC/IP Advertisement Route;
a compressed IP prefix route;
a compressed Ethernet auto-discovery route Ethernet Auto-discovery Route;
a compressed inclusive multicast Ethernet tag route Inclusive Multicast Ethernet Tag Route; or
a compressed Ethernet segment route Ethernet Segment Route.

Optionally, when the first EVPN route is the compressed MAC/IP advertisement route, the necessary routing information includes a route type, a specific routing information length, a route identifier, a MAC address length, a MAC address, a layer 2 multi-protocol label switching label MPLS label 1, and an IP address length.

Optionally, the necessary routing information further includes an internet protocol version 4 IPv4 address or an internet protocol version 6 IPv6 address.

Optionally, when the first EVPN route is the compressed MAC/IP advertisement route, the optional routing information includes an Ethernet segment identifier and an Ethernet tag identifier.

Optionally, the optional routing information further includes an MPLS label2.

Optionally, when the first EVPN route is the compressed IP prefix route, the necessary routing information includes a routing type, a specific routing information length, a route identifier, an IP prefix length, an IP prefix, and an MPLS label.

Optionally, the optional routing information includes an Ethernet segment identifier, an Ethernet tag identifier, and a gateway IP address.

According to a third aspect, this application provides a method for transmitting network layer reachability information NLRI. The method is performed by a first communication apparatus. In the method, a border gateway protocol BGP message is received. The BGP message includes first NLRI that is for advertising a first route. The first NLRI includes a first field set and first indication information. The first field set carries necessary routing information of the first route, and the first indication information indicates that the first NLRI does not include a first field in a second field set. Each field in the second field set carries optional routing information of the first route. The second field set does not include the first indication information. The first route is obtained based on the BGP message.

The first NLRI in the BGP message includes the first field set and the first indication information, and each field in the first field set carries the necessary routing information of the first route. In this way, after receiving the BGP message, the first communication apparatus can obtain the necessary routing information of the first route by parsing the first NLRI in the BGP message, to ensure that the first communication apparatus can normally use the first route. Because the first indication information indicates that the first NLRI does not include the first field in the second field set, and each field in the second field set carries the optical routing information of the first route, a length of the first NLRI is reduced, so that a quantity of pieces of NLRI included in the BGP message is increased, to increase a quantity of routes included in the BGP message, and improve route transmission efficiency.

Optionally, the first indication information further indicates that the first NLRI includes a second field in the second field set. In this way, the first communication apparatus can successfully parse a second field in the first NLRI based on the first indication information, and obtain some optional routing information of the first route from the second field.

Optionally, the BGP message is parsed to obtain the first field set and the first indication information. When the first indication information indicates that the first NLRI does not include the second field set, obtain the first route. The first route includes routing information carried in each field in the first field set. When the first indication information indicates that the first NLRI further includes the second field in the second field set, obtain the first route. The first route includes the routing information carried in each field in the first field set and routing information carried in the second field. In this way, the first communication apparatus can accurately determine whether the first NLRI includes the optional routing information of the first route by the first indication information, and can accurately parse the first route in the first NLRI based on a determining result.

Optionally, the first indication information includes a plurality of bits, and the first indication information indicates, in a bit mapping manner, that the first NLRI does not include the first field. The first field can be easily indicated in the bit mapping manner, and a process in which the first communication apparatus parses the first indication information can be simplified.

Optionally, the first indication information indicates, in an enumeration manner, that the first NLRI does not include the first field. The first field can be easily indicated in the enumeration manner, and a process in which the first communication apparatus parses the first indication information can be simplified.

Optionally, the BGP message includes a plurality of pieces of NLRI, and the plurality of pieces of NLRI include the first NLRI and second NLRI. The BGP message includes a common information field and a plurality of dedicated information fields. The common information field carries same information of the plurality of pieces of NLRI, and the plurality of dedicated information fields are in a one-to-one correspondence with the plurality of pieces of NLRI. Each of the plurality of dedicated information fields carries information other than the same information of each of the plurality of pieces of NLRI.

The common information field carries the same information of the plurality of pieces of NLRI, and the dedicated information field corresponding to each piece of NLRI does not need to include the same information. In this way, a total length of the common information field and the plurality of dedicated information fields is enabled to be less than a total length of the plurality of pieces of NLRI. In this way, the quantity of routes included in the BGP message is further increased, and the route transmission efficiency is improved.

Optionally, the BGP message includes third NLRI. The third NLRI includes the common information field and the dedicated information fields, and the plurality of pieces of NLRI are a plurality of pieces of sub-NLRI in the third NLRI. In this way, the common information field and the plurality of dedicated information fields are encapsulated in one piece of third NLRI, to simplify a structure of the BGP message.

Optionally, the first route is a first Ethernet virtual private network EVPN route, and the first NLRI is first EVPN NLRI.

Optionally, an encoding format of the first EVPN NLRI is different from an encoding format of EVPN NRLI defined in RFC 7432.

Optionally, the first EVPN NLRI includes a route type field, and the first EVPN route indicated by the route type field is:
a compressed media access control/internet protocol advertisement route MAC/IP Advertisement Route;
a compressed IP prefix route;
a compressed Ethernet auto-discovery route Ethernet Auto-discovery Route;
a compressed inclusive multicast Ethernet tag route Inclusive Multicast Ethernet Tag Route; or
a compressed Ethernet segment route Ethernet Segment Route.

Optionally, when the first EVPN route is the compressed MAC/IP advertisement route, the necessary routing information includes a route type, a specific routing information length, a route identifier, a MAC address length, a MAC address, a layer 2 multi-protocol label switching label MPLS label 1, and an IP address length.

Optionally, the necessary routing information further includes an internet protocol version 4 IPv4 address or an internet protocol version 6 IPv6 address.

Optionally, when the first EVPN route is the compressed MAC/IP advertisement route, the optional routing information includes an Ethernet segment identifier and an Ethernet tag identifier.

Optionally, the optional routing information further includes an MPLS label2.

Optionally, when the first EVPN route is the compressed IP prefix route, the necessary routing information includes a routing type, a specific routing information length, a route identifier, an IP prefix length, an IP prefix, and an MPLS label.

Optionally, the optional routing information includes an Ethernet segment identifier, an Ethernet tag identifier, and a gateway IP address.

According to a fourth aspect, this application provides a method for transmitting network layer reachability information NLRI. The method is performed by a first communication apparatus. In the method, a border gateway protocol BGP message is received. The BGP message includes first NLRI that is for advertising a first route. The first NLRI includes a first field set and first indication information. The first field set carries necessary routing information of the first route, and the first indication information indicates that the first NLRI does not include a second field set. Each field in the second field set carries optional routing information of the first route. The second field set does not include the first indication information. The first route is obtained based on the BGP message.

The first NLRI in the BGP message includes the first field set and the first indication information, and each field in the first field set carries the necessary routing information of the first route. In this way, after receiving the BGP message, the first communication apparatus can obtain the necessary routing information of the first route by parsing the first NLRI in the BGP message, to ensure that the first communication apparatus can normally use the first route. Because the first indication information indicates that the first NLRI does not include the second field set, and each field in the second field set carries the optical routing information of the first route, a length of the first NLRI is greatly reduced, so that a quantity of pieces of NLRI included in the BGP message is increased, to increase a quantity of routes included in the BGP message, and improve route transmission efficiency.

Optionally, the first indication information includes a plurality of bits, and the first indication information indicates, in a bit mapping manner, that the first NLRI does not include each field in the second field set. Each field in the second field set can be easily indicated in the bit mapping manner, and a process in which the first communication apparatus parses the first indication information can be simplified.

Optionally, the first indication information indicates, in an enumeration manner, that the first NLRI does not include each field in the second field set. Each field in the second field set can be easily indicated in the enumeration manner, and a process in which the first communication apparatus parses the first indication information can be simplified.

Optionally, the BGP message includes a plurality of pieces of NLRI, and the plurality of pieces of NLRI include the first NLRI and second NLRI. The BGP message includes a common information field and a plurality of dedicated information fields. The common information field carries same information of the plurality of pieces of NLRI, and the plurality of dedicated information fields are in a one-to-one correspondence with the plurality of pieces of NLRI. Each of the plurality of dedicated information fields carries information other than the same information of each of the plurality of pieces of NLRI.

The common information field carries the same information of the plurality of pieces of NLRI, and the dedicated information field corresponding to each piece of NLRI does not need to include the same information. In this way, a total length of the common information field and the plurality of dedicated information fields is enabled to be less than a total length of the plurality of pieces of NLRI. In this way, the quantity of routes included in the BGP message is further increased, and the route transmission efficiency is improved.

Optionally, the BGP message includes third NLRI. The third NLRI includes the common information field and the dedicated information fields, and the plurality of pieces of NLRI are a plurality of pieces of sub-NLRI in the third NLRI. In this way, the common information field and the plurality of dedicated information fields are encapsulated in one piece of third NLRI, to simplify a structure of the BGP message.

Optionally, the first route is a first Ethernet virtual private network EVPN route, and the first NLRI is first EVPN NLRI.

Optionally, an encoding format of the first EVPN NLRI is different from an encoding format of EVPN NRLI defined in RFC 7432.

Optionally, the first EVPN NLRI includes a route type field, and the first EVPN route indicated by the route type field is:
a compressed media access control/internet protocol advertisement route MAC/IP Advertisement Route;
a compressed IP prefix route;
a compressed Ethernet auto-discovery route Ethernet Auto-discovery Route;
a compressed inclusive multicast Ethernet tag route Inclusive Multicast Ethernet Tag Route; or
a compressed Ethernet segment route Ethernet Segment Route.

Optionally, when the first EVPN route is the compressed MAC/IP advertisement route, the necessary routing information includes a route type, a specific routing information length, a route identifier, a MAC address length, a MAC address, a layer 2 multi-protocol label switching label MPLS label1, and an IP address length.

Optionally, the necessary routing information further includes an IPv4 address or an IPv6 address.

Optionally, when the first EVPN route is the compressed MAC/IP advertisement route, the optional routing information includes an Ethernet segment identifier and an Ethernet tag identifier.

Optionally, the optional routing information further includes an MPLS label2.

Optionally, when the first EVPN route is the compressed IP prefix route, the necessary routing information includes a routing type, a specific routing information length, a route identifier, an IP prefix length, an IP prefix, and an MPLS label.

Optionally, the optional routing information includes an Ethernet segment identifier, an Ethernet tag identifier, and a gateway IP address.

According to a fifth aspect, this application provides an apparatus for transmitting network layer reachability information NLRI, including a transceiver unit and a processing unit. The transceiver unit is configured to perform a sending and receiving operation performed by a first communication apparatus when the method for transmitting network layer reachability information NLRI in the first aspect or any one of the optional manners of the first aspect is implemented. The processing unit is configured to perform another operation other than the sending and receiving operation. For example, when the method for transmitting network layer reachability information NLRI in the first aspect is implemented, the processing unit is configured to obtain a BGP message, and the transceiver unit is configured to send the BGP message to a second communication apparatus.

According to a sixth aspect, this application provides an apparatus for transmitting network layer reachability information NLRI, including a transceiver unit and a processing unit. The transceiver unit is configured to perform a sending and receiving operation performed by a first communication apparatus when the method for transmitting network layer reachability information NLRI in the second aspect or any one of the optional manners of the second aspect is implemented. The processing unit is configured to perform another operation other than the sending and receiving operation. For example, when the method for transmitting network layer reachability information NLRI in the second aspect is implemented, the processing unit is configured to obtain a BGP message, and the transceiver unit is configured to send the BGP message to a second communication apparatus.

According to a seventh aspect, this application provides an apparatus for transmitting network layer reachability information NLRI, including a transceiver unit and a processing unit. The transceiver unit is configured to perform a sending and receiving operation performed by a first communication apparatus when the method for transmitting network layer reachability information NLRI in the third aspect or any one of the optional manners of the third aspect is implemented. The processing unit is configured to perform another operation other than the sending and receiving operation. For example, when the method for transmitting network layer reachability information NLRI according to the third aspect is implemented, the transceiver unit is configured to receive a BGP message, and the processing unit is configured to obtain a first route based on the BGP message.

According to an eighth aspect, this application provides an apparatus for transmitting network layer reachability information NLRI, including a transceiver unit and a processing unit. The transceiver unit is configured to perform a sending and receiving operation performed by a first communication apparatus when the method for transmitting network layer reachability information NLRI in the fourth aspect or any one of the optional manners of the fourth aspect is implemented. The processing unit is configured to perform another operation other than the sending and receiving operation. For example, when the method for transmitting network layer reachability information NLRI according to the fourth aspect is implemented, the transceiver unit is configured to receive a BGP message, and the processing unit is configured to obtain a first route based on the BGP message.

According to a ninth aspect, this application provides a device for transmitting network layer reachability information NLRI. The device includes a processor, a memory, and a computer program stored in the memory. When the processor performs the computer program, the device is enabled to implement the method according to the first aspect or any one of the optional manners of the first aspect.

According to a tenth aspect, this application provides a device for transmitting network layer reachability information NLRI. The device includes a processor, a memory, and a computer program stored in the memory. When the processor performs the computer program, the device is enabled to implement the method according to the second aspect or any one of the optional manners of the second aspect.

According to an eleventh aspect, this application provides a device for transmitting network layer reachability information NLRI. The device includes a processor, a memory, and a computer program stored in the memory. When the processor performs the computer program, the device is enabled to implement the method according to the third aspect or any one of the optional manners of the third aspect.

According to a twelfth aspect, this application provides a device for transmitting network layer reachability information NLRI. The device includes a processor, a memory, and a computer program stored in the memory. When the processor performs the computer program, the device is enabled to implement the method according to the fourth aspect or any one of the optional manners of the fourth aspect.

According to a thirteenth aspect, this application provides a computer program product, including a computer program. When the computer program is performed by a processor, the method in the first aspect, the second aspect, the third aspect, the fourth aspect, any optional manner of the first aspect, any optional manner of the second aspect, any optional manner of the third aspect, or any optional manner of the fourth aspect is implemented.

According to a fourteenth aspect, this application provides a computer-readable storage medium, configured to store a computer program. When the computer program is processed and performed, the method in the first aspect, the second aspect, the third aspect, the fourth aspect, any optional manner of the first aspect, any optional manner of the second aspect, any optional manner of the third aspect, or any optional manner of the fourth aspect is implemented.

According to a fifteenth aspect, this application provides a system for transmitting network layer reachability information NLRI. The system includes the apparatus according to the fifth aspect and the apparatus according to the seventh aspect, or includes the apparatus according to the sixth aspect and the apparatus according to the eighth aspect, or includes the apparatus according to the ninth aspect and the apparatus according to the eleventh aspect, or includes the apparatus according to the tenth aspect and the apparatus according to the twelfth aspect.

### BRIEF DESCRIPTION OF DRAWINGS

FIG. 1 is a schematic diagram of a network architecture according to an embodiment of this application;
FIG. 2 is a schematic structural diagram of a piece of NLRI according to an embodiment of this application;
FIG. 3 is a schematic structural diagram of another piece of NLRI according to an embodiment of this application;
FIG. 4 is a schematic structural diagram of another piece of NLRI according to an embodiment of this application;
FIG. 5 is a schematic structural diagram of another piece of NLRI according to an embodiment of this application;
FIG. 6 is a flowchart of a method for transmitting network layer reachability information NLRI according to an embodiment of this application;
FIG. 7 is a schematic structural diagram of a piece of compressed NLRI according to an embodiment of this application;
FIG. 8 is a schematic structural diagram of another piece of compressed NLRI according to an embodiment of this application;
FIG. 9 is a schematic structural diagram of another piece of compressed NLRI according to an embodiment of this application;
FIG. 10 is a schematic structural diagram of another piece of compressed NLRI according to an embodiment of this application;
FIG. 11 is a schematic structural diagram of another piece of compressed NLRI according to an embodiment of this application;
FIG. 12 is a schematic structural diagram of another piece of compressed NLRI according to an embodiment of this application;
FIG. 13 is a schematic structural diagram of an apparatus for transmitting network layer reachability information NLRI according to an embodiment of this application;
FIG. 14 is a schematic structural diagram of another apparatus for transmitting network layer reachability information NLRI according to an embodiment of this application;
FIG. 15 is a schematic structural diagram of a network device according to an embodiment of this application;
FIG. 16 is a schematic structural diagram of another network device according to an embodiment of this application; and
FIG. 17 is a schematic structural diagram of another system for transmitting network layer reachability information NLRI according to an embodiment of this application.

### DESCRIPTION OF EMBODIMENTS

The following further describes in detail embodiments of this application with reference to accompanying drawings.

A VPN is a private network established on a public network. A network device in the VPN has a route, and the network device needs to transmit the route to another network device. With the development of network technologies, conventional layer 2 and layer 3 VPNs are gradually evolved to Ethernet virtual private networks (Ethernet virtual private network, EVPN). With the continuous deployment of EVPNs, a quantity of routes on network devices increases sharply, causing a quantity of routes transmitted on the network to increase sharply. To transmit a VPN route, the network device transmits the route to another network device through a BGP message. The BGP message includes at least one piece of NLRI, and each piece of NLRI carries a route on the network device.

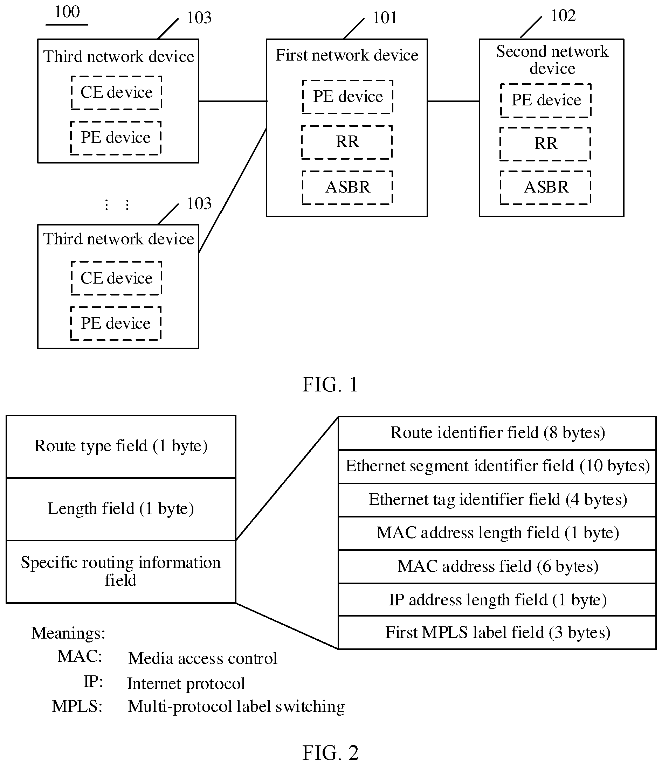

Refer to FIG. 1. Embodiments of this application provide a network architecture 100. The network architecture 100 includes a first network device 101, a second network device 102, and at least one third network device 103. The first network device 101 separately communicates with the second network device 102 and each third network device 103.

Optionally, the first network device 102 and the second network device 102 are devices in a VPN environment. For example, the first network device 101 and the second network device 102 are devices in an EVPN environment.

In some embodiments, the first network device 101, the second network device 102, and each third network device 103 are all located in a communication network. The first network device 101 and the second network device 102 establish a network connection in the communication network, to implement communication between the first network device 101 and the second network device 102. The first network device 101 and each third network device 103 establish a network connection in the communication network, to implement communication between the first network device 101 and each third network device 103. Certainly, there are other manners of implementing communication between the first network device 101 and the second network device 102, and other manners of implementing communication between the first network device 101 and each third network device 103. Details are not described herein again.

For each third network device 103 communicating with the first network device 101, the third network device 103 sends its route to the first network device 101, and the first network device 101 receives routes sent by different third network devices 103, to enable the first network device 101 to include a large quantity of routes, and these routes include EVPN routes and the like.

For example, refer to FIG. 1. The third network device 103 is a customer edge (customer edge, CE) device, the first network device 101 is a provider edge (provider edge, PE) device, and the PE device receives routes sent by different CE devices. In this way, the PE device (that is, the first network device 101) includes routes of different CE devices.

For another example, the third network device 103 is a PE device, the first network device 101 is an RR device or an ASBR device, and the RR device or the ASBR device receives routes sent by different PE devices. In this way, the RR device or the ASBR device (that is, the first network device 101) includes routes of different PE devices.

In some embodiments, the first network device 101 and the second network device 102 are routing devices in the VPN environment. For example, refer to FIG. 1. The first network device 101 is a PE device, an RR device, an ASBR device, or the like, and the second network device 102 is a PE device, an RR device, an ASBR device, or the like.

The first network device 101 needs to transmit the large quantity of routes to the second network device 102. During implementation, the first network device 101 generates a BGP message. The BGP message includes a plurality of pieces of NLRI. For each piece of NLRI, the NLRI carries one route. The route is a route on the first network device 101, and each piece of NLRI carries a different route. The first network device 101 sends the BGP message to the second network device. The second network device 102 receives the BGP message, and obtains the route on the first network device 101 from the BGP message. In this way, the first network device 101 transmits the route to the second network device.

For any NLRI in the BGP message, for ease of description, the NLRI is referred to as first NLRI, and the first NLRI carries a first route. The first NLRI includes a plurality of fields, and the plurality of fields respectively carry different routing information in the first route.

In some embodiments, the first route is an EVPN route or the like.

The following uses an example in which the first route is an EVPN route, to describe a specific routing format of a set included in the current first route. Specifically, the EVPN route includes:
a media access control/internet protocol Advertisement Route (media access control /internet protocol Advertisement Route, MAC/IP Advertisement Route);
an IP prefix route;
an Ethernet auto-discovery route (Ethernet Auto-discovery Route);
an inclusive multicast Ethernet tag route (Inclusive Multicast Ethernet Tag Route); or
an Ethernet segment route (Ethernet Segment Route).

When the first route carried in the first NLRI is the MAC/IP advertisement route, the first NLRI is MAC/IP advertisement NLRI, and the MAC/IP advertisement NLRI carries the MAC/IP advertisement route.

Refer to an example of first NLRI (MAC/IP advertisement NLRI) shown in FIG. 2. In this example, the first NLRI includes a route type field that occupies 1 byte, a length field that occupies 1 byte, and a specific routing information field. The specific routing information field includes: a route identifier field, an Ethernet segment identifier field, an Ethernet tag identifier field, a MAC address length field, a MAC address field, an IP address length field, and a first multi-protocol label switching label (multi-protocol label switching label, MPLS Label) field. The route identifier field, the Ethernet segment identifier field, the Ethernet tag identifier field, the MAC address length field, the MAC address field, the IP address length field, and the first MPLS label field respectively occupy 8 bytes, 10 bytes, 4 bytes, 1 byte, 6 bytes, 1 byte, and 3 bytes.

The route type field, the length field, the route identifier field, the Ethernet segment identifier field, the Ethernet tag identifier field, the MAC address length field, the MAC address field, the IP address length field, and the first MPLS field respectively carry a route type, a specific routing information length, a route identifier, an Ethernet segment identifier, an Ethernet tag identifier, a MAC address length, a MAC address, an IP address length, and an MPLS label 1. The specific routing information length is a length of the specific routing information field, and the MPLS label 1 is an MPLS label corresponding to the MAC address, that is, a layer 2 MPLS label. That is, a first route includes a route type, a specific routing information length, a route identifier, an Ethernet segment identifier, an Ethernet tag identifier, a MAC address length, a MAC address, an IP address length, and an MPLS label 1.

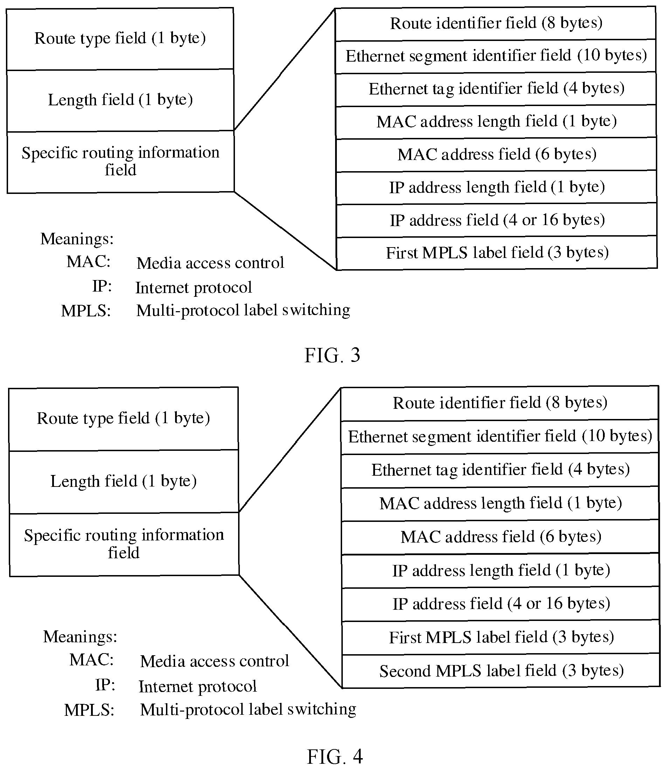

Refer to FIG. 3 or FIG. 4. A specific routing information field of first NLRI may further include one or more of the following fields: an IP address field or a second MPLS field. A first route may further include one or more pieces of the following routing information: an IP address or an MPLS label2, where the MPLS label2 is an MPLS label corresponding to the IP address, and is a layer 3 MPLS label.

The IP address field and the second MPLS field respectively carry the IP address and the MPLS label2, and the IP address field and the second MPLS field respectively occupy a first byte quantity and 3 bytes. When the IP address carried in the IP address field is an internet protocol version 4 (internet protocol version, IPv4) address, the first byte quantity is 4. When the IP address carried in the IP address field is an internet protocol version 6 (internet protocol version 6, IPv6) address, the first byte quantity is 16.

The MAC/IP advertisement route is classified into at least the following five cases, and the five cases are A-E. In other words, the first route carried in the first NLRI has at least the following five cases A-E.

Case A: The first route is a MAC route (MAC-only route).

Refer to FIG. 2. In the case A, the first NLRI is for transmitting MAC information, and the first route carried in the first NLRI does not include an IP address and an MPLS label2, that is, the first NLRI does not include an IP address field and a second MPLS field. Therefore, a length of the first NLRI is 1+1+8+10+4+1+6+1+0+3+0=35 bytes.

Case B: The first route is a MAC-IPv4 route without an MPLS label2 (MAC-IP route without MPLS Label2).

Refer to FIG. 3. In the case B, the first NLRI is for transmitting MAC information and IP information, and does not carry the MPLS label2, where the IP information includes an IP address, and the IP address is an IPv4 address. That is, the first route carried in the first NLRI does not include the MPLS label2, but includes the IP address. The first NLRI includes the IP address field, but does not include the second MPLS label field. The IP address field carrying the IP address occupies 4 bytes, that is, the first byte quantity is 4. Therefore, a length of the first NLRI is 1+1+8+10+4+1+6+1+4+3+0=39 bytes.

Case C: The first route is a MAC-IPv4 route with an MPLS label2 (MAC-IP route with MPLS2).

Refer to FIG. 4. In the case C, the first NLRI is for transmitting MAC information and IP information, and carries the MPLS label2, where the IP information includes an IP address. That is, the first route carried in the first NLRI includes the IP address and the MPLS label2. The IP address is an IPv4 address. The first NLRI includes the IP address field and the second MPLS label field. The IP address field carrying the IP address occupies 4 bytes, that is, the first byte quantity is 4. Therefore, a length of the first NLRI is 1+1+8+10+4+1+6+1+4+3+3=42 bytes.

Case D: The first route is a MAC-IPv6 route without an MPLS label2 (MAC-IPv6 route without MPLS Label2).

Refer to FIG. 3. In the case D, the first NLRI is for transmitting MAC information and IP information, and does not carry the MPLS label2. The IP information includes an IP address. That is, the first route carried in the first NLRI does not include the MPLS label2, but includes the IP address. The IP address is an IPv6 address. The first NLRI includes the IP address field, but does not include the second MPLS label field. The IP address field carrying the IP address occupies 16 bytes, that is, the first byte quantity is 16. Therefore, a length of the first NLRI is 1+1+8+10+4+1+6+1+16+3+0 =51 bytes.

Case E: The first route is a MAC-IPv6 route with an MPLS label2 (MAC-IPv6 route without MPLS Label2).

Refer to FIG. 4. In the case E, the first NLRI is for transmitting MAC information and IP information, and carries the MPLS label2, where the IP information includes an IP address. That is, the first route carried in the first NLRI includes the IP address and the MPLS label2. The IP address is an IPv6 address. The first NLRI includes the IP address field and the second MPLS label field. The IP address field carrying the IP address occupies 16 bytes, that is, the first byte quantity is 16. Therefore, a length of the first NLRI is 1+1+8+10+4+1+6+1+16+3+3=54 bytes.

When a first EVPN route carried in the first NLRI is an IP prefix route, the first NLRI is IP prefix NLRI, and the IP prefix NLRI carries the IP prefix route.

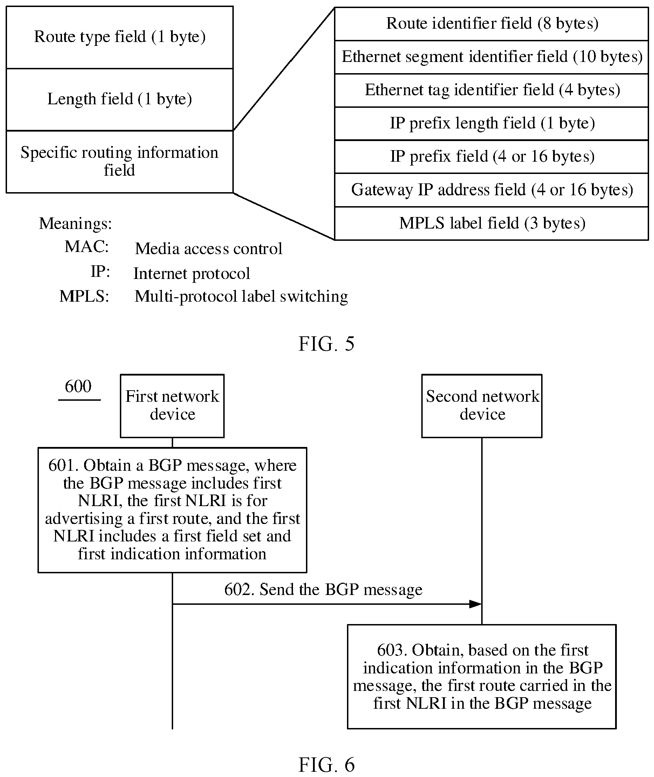

Refer to an example of first NLRI (IP prefix NLRI) shown in FIG. 5. In this example, the first NLRI includes a route type field that occupies 1 byte, a length field that occupies 1 byte, and a specific routing information field. The specific routing information field includes a route identifier field, an Ethernet segment identifier field, an Ethernet tag identifier field, an IP prefix length field, an IP prefix field, a gateway IP address field, and an MPLS label field. The route identifier field, the Ethernet segment identifier field, the Ethernet tag identifier field, the IP prefix length field, the IP prefix field, the gateway IP address field, and the MPLS label field respectively occupy 8 bytes, 10 bytes, 4 bytes, 1 byte, a third byte quantity, a fourth byte quantity, and 3 bytes. The route type field, the length field, the route identifier field, the Ethernet segment identifier field, the Ethernet tag identifier field, the IP prefix length field, the IP prefix field, the gateway IP address field, and the MPLS label field respectively carry a route type, a specific routing information length, a route identifier, an Ethernet segment identifier, an Ethernet tag identifier, an IP prefix length, an IP prefix, a gateway IP address, and a layer 3 MPLS label. That is, a first route includes a route type, a specific route type length, a route identifier, an Ethernet segment identifier, an Ethernet tag identifier, an IP prefix length, an IP prefix, a gateway IP address, and a layer 3 MPLS label.

A first route advertised by the first NLRI has at least the following two cases, and the two cases are cases 1 and 2.

Case 1: The first route is an IPv4 prefix route (IPv4 Prefix route).

In the IPv4 prefix route, the IP prefix is an IPv4 prefix, the gateway IP address is an IPv4 address, and both a length of the IP prefix field carrying the IPv4 prefix and a length of the gateway IP address field carrying the gateway IP address are 4 bytes, that is, the third byte quantity is 4, and the fourth byte quantity is 4. That is, a length of the first NLRI for notifying the IPv4 prefix route is 1+1+8+10+4+1+4+4+3=36 bytes.

Case 2: The first route is an IPv6 prefix route (IPv6 Prefix route).

In the IPv6 prefix route, the IP prefix is an IPv6 prefix, the gateway IP address is an IPv6 address, and both a length of an IPv6 prefix field carrying the IPv6 prefix and a length of the gateway IP address field carrying the gateway IP address are 16 bytes, that is, the third byte quantity is 16, and the fourth byte quantity is 16. That is, a length of the first NLRI for notifying the IPv6 prefix route is 1+1+8+10+4+1+16+16+3=60 bytes.

When the first route is an Ethernet auto-discovery route, an inclusive multicast Ethernet tag route, or an Ethernet segment route, a structure of the first NLRI is the same as the structure of the MAC/IP advertisement NLRI, and is not described herein again.

The first route includes a large amount of routing information, and the first NLRI includes a large quantity of fields to carry different routing information in the first route, to enable the length of the first NLRI to be long. However, a total length of a BGP message is fixed. As a result, a quantity of pieces of first NLRI that can be carried in each BGP message is limited, and efficiency of transmitting the route via the BGP message is affected. For example, it is assumed that a length of the BGP message is 4096 bytes, first NLRI in the BGP message is the NLRI in the foregoing case A, and the length of the first NLRI is 35 bytes. In other words, the BGP message may include a maximum of 117 pieces of first NLRI, and a maximum of 117 routes can be transmitted via the BGP message.

To resolve the foregoing problem, embodiments of this application provide a method for transmitting NLRI. Based on the existing NLRI, routing information carried in the NLRI is divided into two parts: necessary routing information and optional routing information, which are respectively carried in different fields. That is, in the NLRI, a first field set is used to fixedly carry the necessary routing information. For example, for an EVPN route, because the EVPN route includes a plurality of different types of routes, an intersection set may be obtained between routing information carried in the different types of EVPN routes through comparison and analysis, to obtain routing information that needs to be transmitted by each type of route as the necessary routing information, and other routing information is used as the optional routing information and carried in a second field set. In a process of transmitting the NLRI, for each different type of route, only necessary routing information and optional routing information of each type of route need to be transmitted, and all fields do not need to be transmitted. Therefore, fields that are not required for the route may be used to carry other information. A route advertised by the method in this application may be referred to as a compressed route. A quantity of pieces of routing information included in the compressed route is less than a quantity of pieces of routing information included in an uncompressed route. In this way, a quantity of fields included in NLRI carrying the compressed route is reduced, and a length of the NLRI is reduced, to enable a BGP message to include more NLRI, thereby improving route transmission efficiency. The quantity of the fields in the NLRI may be reduced by any one of the following embodiments, to improve route transmission efficiency.

With reference to FIG. 6, the following describes a method 600 for transmitting NLRI provided in embodiments of this application. The method 600 may be applied to the network architecture 100 shown in FIG. 1. A first network device in the method 600 may correspond to, for example, the first network device 101 shown in FIG. 1, and a second network device may correspond to the second network device 102 shown in FIG. 1. Refer to FIG. 6. Embodiments of this application provide a method 600 for transmitting NLRI. The method 600 is applied to the network architecture 100 shown in FIG. 1, and the method 600 includes the following steps.

Step 601. A first network device obtains a BGP message, where the BGP message includes first NLRI. The first NLRI is for advertising a first route. The first NLRI includes a first field set and first indication information, where the first field set carries necessary routing information in the first route, and the first indication information indicates that the first NLRI does not include a first field in a second field set. Each field in the second field set carries optional routing information of the first route, and the second field set does not include the first indication information.

In step 601, only one structure example of the first NLRI is listed. For ease of description, the structure example is referred to as a first structure example. In the first structure example, the first field is a part of fields in the second field set. The second field set further includes a second field. The second field is another field other than the first field in the second field set. The first indication information further indicates that the first NLRI includes the second field in the second field set. In other words, the first NLRI includes the first field set, the first indication information, and the part of fields in the second field set. In this case, the first NLRI includes the necessary routing information of the first route and some optional routing information of the first route.

In some embodiments, the first indication information includes a plurality of bits, and the first indication information indicates, in a bit mapping manner, that the first NLRI does not include the first field. During implementation, the first indication information includes a bit corresponding to each field in the second field set, where a value of the bit corresponding to the first field is a first value, and indicates that the first NLRI does not include the first field; and a value of the bit corresponding to the second field is a second value, and indicates that the first NLRI includes the second field. The first value is 0, and the second value is 1; or the first value is 1, and the second value is 0.

In some embodiments, the first indication information indicates, in an enumeration manner, that the first NLRI does not include the first field. During implementation, the first indication information is a field, and information carried in the field indicates that the first NLRI does not include the first field.

For example, the second field set includes an Ethernet segment identifier field, an Ethernet tag identifier field, and a second MPLS label field. It is assumed that when the first field includes the Ethernet segment identifier field and the Ethernet tag identifier field, a value 1 is used to indicate the first field; or when the first field includes the Ethernet tag identifier field and the second MPLS label field, a value 2 is used to indicate the first field. Alternatively, when the first field includes the Ethernet segment identifier field and the second MPLS label field, a value 3 is used to indicate the first field. The first field may be further combined in another manner, which is not enumerated herein one by one.

In some embodiments, a length of the first indication information is 1 byte, 2 bytes, or the like.

In addition to the first structure example, the first NLRI may have another structure example. For example, the first NLRI is the following second structure example: The first NLRI includes the first field set and the first indication information, but does not include the second field set. The first indication information indicates that the first NLRI does not include the second field set. In this case, the first NLRI includes the necessary routing information of the first route, and does not include the optional routing information of the first route.

The BGP message includes one or more pieces of first NLRI, and structures of the one or more pieces of first NLRI included in the BGP message are the same or different.

The first NLRI in the first structure example does not include the first field in the second field set, and the first NLRI in the second structure example does not include the second field set. In this way, a length of the first NLRI can be reduced, to enable the BGP message to include more first NLRI, and enable the BGP message to include more first routes, thereby improving route transmission efficiency.

The first route carried in the first NLRI is different from the route advertised by the NLRI shown in FIG. 2 to FIG. 4. The first route carried in the first NLRI is a compressed route, and the first NLRI carries necessary routing information of the first route, or the first NLRI carries the necessary routing information or some optional routing information of the first route. The route advertised by the NLRI shown in FIG. 2 to FIG. 4 is an uncompressed route. Each first route carried in the first NLRI corresponds to one uncompressed route. For the first route and the uncompressed route corresponding to the first route, a length of the first route is less than a length of the uncompressed route.

In some embodiments, the first route is an EVPN route or the like.

It should be noted that a concept of this application is to classify a route into necessary routing information and optional routing information. For NLRI that carries the route, the NLRI does not include a field carrying the optional routing information or includes some fields carrying the optional routing information. In embodiments of this application, the EVPN route is used as an example. However, the concept of this application is also applicable to another scenario in which a route is transmitted via VPN NLRI. In the another scenario, the route can be classified into a route of necessary routing information and a route of optional routing information, and the routes can be transmitted by using the method in the embodiments of this application.

When the first route is an EVPN route, the first NLRI is EVPN NLRI, and an encoding format of the EVPN NLRI is different from an encoding format of EVPN NRLI defined in RFC 7432.

In some embodiments, the first NLRI includes a route type field, and the route type field indicates that the EVPN route carried in the first NLRI is:
a compressed MAC/IP advertisement route;
a compressed IP prefix route.
a compressed Ethernet auto-discovery route;
a compressed inclusive multicast Ethernet tag route; or
a compressed Ethernet segment route.

When the first route carried in the first NLRI is the compressed MAC/IP advertisement route, the first NLRI is compressed MAC/IP advertisement NLRI, and the compressed MAC/IP advertisement NLRI carries the compressed MAC/IP advertisement route, that is, the first NLRI carries the compressed MAC/IP advertisement route.

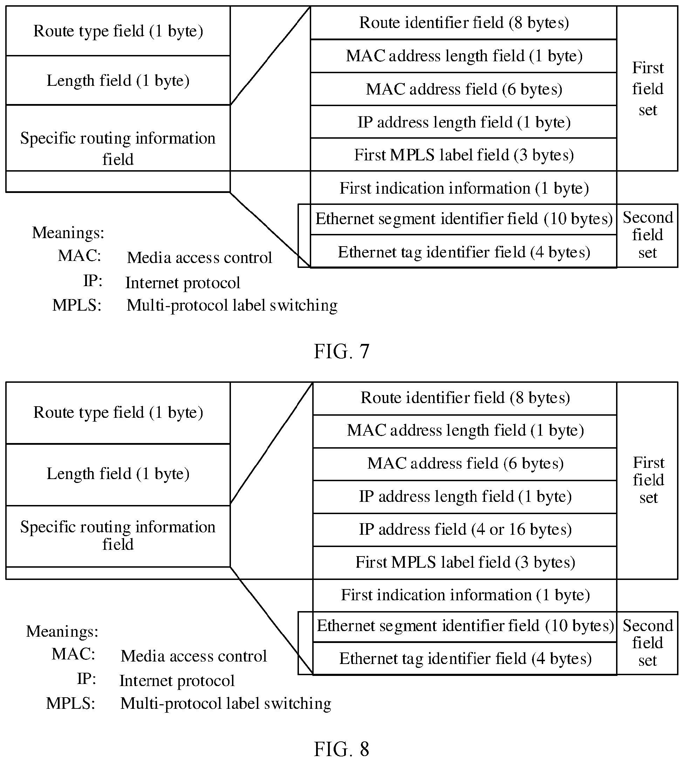

In some embodiments, refer to FIG. 7. Necessary routing information of a first route includes a route type, a specific routing information length, a route identifier, a MAC address length, a MAC address, an IP address length, and an MPLS label 1, and optional routing information of the first route includes an Ethernet segment identifier and an Ethernet tag identifier. A first field set of first NLRI includes a route type field, a length field, a route identifier field, a MAC address length field, a MAC address field, an IP address length field, and a first MPLS field. A second field set includes an Ethernet segment identifier field and an Ethernet tag identifier field. The route type is a compressed MAC/IP Advertisement Route.

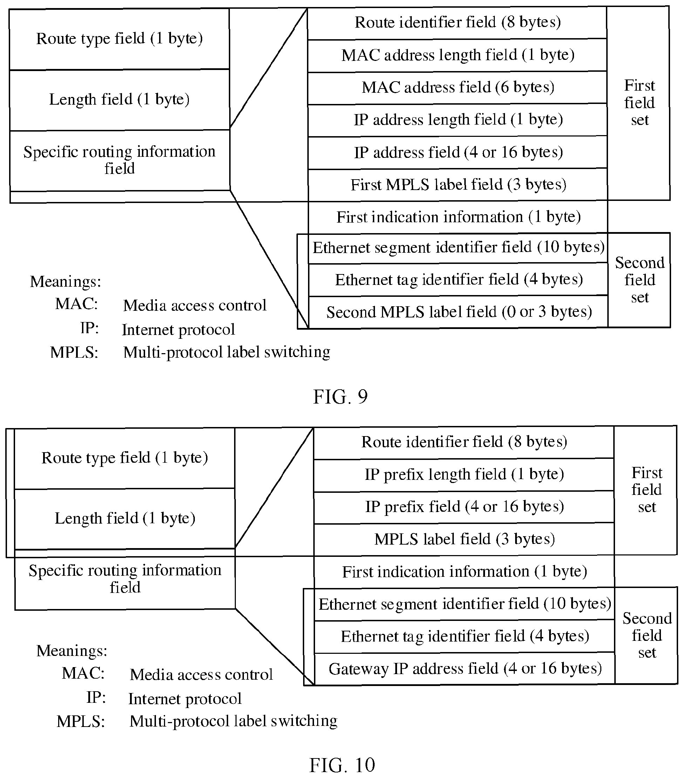

In some embodiments, refer to FIG. 8 or FIG. 9. Necessary routing information of a first route further includes an IP address, where the IP address is an IPv4 address or an IPv6 address, and optional routing information of the first route further includes an MPLS label1. A first field set of first NLRI further includes an IP address field, and a second field set further includes a second MPLS label field.

When the first route is a compressed MAC/IP Advertisement Route, the first route has at least the following five cases: A1-E1. The first routes in the five cases are all compressed routes, and uncompressed routes corresponding to the first routes are the five routes in the foregoing cases A-E. The following uses an example in which a length of first indication information is 1 byte, and separately describes structures of the first routes and the first NLRI carrying the first routes in the five cases.

Case A1: The first route is a compressed MAC route (compressed MAC-only route). The uncompressed route corresponding to the first route is the MAC route shown in the foregoing case A.

Refer to FIG. 7. In the case A1, the first NLRI is for transmitting MAC information, and the first route carried in the first NLRI does not include an IP address or an MPLS label2. That is, the necessary routing information of the first route does not include the IP address, and the optional routing information of the first route does not include the MPLS label2. The first field set of the first NLRI does not include the IP address field, and the second field set of the first NLRI does not include the second MPLS field.

In some embodiments, the first NLRI includes the first field set and the first indication information, and the first indication information indicates that the first NLRI does not include the second field set. Therefore, a length of the first NLRI is 1+1+8+1+6+1+3+1=22 bytes, which is less than 35 bytes, that is, less than the length of the NLRI in the case A.

In some embodiments, the first NLRI further includes the second field in the second field set. In this embodiment, the first indication information indicates that the first NLRI does not include a first field in the second field set, but includes the second field in the second field set. The first field is an Ethernet segment identifier field, and the second field is an Ethernet tag identifier field; or the first field is an Ethernet tag identifier field, and the second field is an Ethernet segment identifier field. That is, the first NLRI further includes the Ethernet segment identifier field, and the length of the first NLRI is 1+1+8+1+6+1+3+1+10=32 bytes, which is less than 35 bytes, that is, less than the length of the NLRI in the case A. Alternatively, the first NLRI further includes the Ethernet tag identifier field. Therefore, the length of the first NLRI is 1+1+8+1+6+1+3+1+4=26 bytes, which is less than 35 bytes, that is, less than the length of the NLRI in the case A.

Case B1: The first route is a compressed MAC-IPv4 route without an MPLS label2 (compressed MAC-IP route without MPLS Label2). The uncompressed route corresponding to the first route is the MAC-IPv4 route without the MPLS label2 shown in the foregoing case B.

Refer to FIG. 8. In the case B1, the first NLRI is for transmitting MAC information and IP information, and does not carry the MPLS label2, where the IP information includes an IP address, and the IP address is an IPv4 address. In other words, the necessary routing information of the first route further includes the IP address, the optional routing information of the first route does not include the MPLS label2. The first field set of the first NLRI further includes the IP address field, where the IP address field occupies 4 bytes. The second field set of the first NLRI does not include the second MPLS field.

In some embodiments, the first NLRI includes the first field set and the first indication information, and the first indication information indicates that the first NLRI does not include the second field set. Therefore, the length of the first NLRI is 1+1+8+1+6+1+4+3+1=26 bytes, which is less than 39 bytes, that is, less than the length of the NLRI in the case B.

In some embodiments, the first NLRI further includes the second field in the second field set. In this embodiment, the first indication information indicates that the first NLRI does not include the first field in the second field set, but includes the second field in the second field set. The first field is an Ethernet segment identifier field, and the second field is an Ethernet tag identifier field; or the first field is an Ethernet tag identifier field, and the second field is an Ethernet segment identifier field. That is, the first NLRI further includes the Ethernet segment identifier field, and the length of the first NLRI is 1+1+8+1+6+1+4+3+1+10=36 bytes, which is less than 39 bytes, that is, less than the length of the NLRI in the case B. Alternatively, the first NLRI further includes the Ethernet tag identifier field. Therefore, the length of the first NLRI is 1+1+8+1+6+1+4+3+1+4=30 bytes, which is less than 39 bytes, that is, less than the length of the NLRI in the case B.

Case C1: The first route is a compressed MAC-IPv4 route with an MPLS label2 (compressed MAC-IP route with MPLS2). The uncompressed route corresponding to the first route is the MAC-IPv4 route with the MPLS label2 shown in the foregoing case C.

Refer to FIG. 9. In the case C1, the first NLRI is for transmitting MAC information and IP information, and carries the MPLS label2, where the IP information includes an IP address, and the IP address is an IPv4 address. In other words, the necessary routing information of the first route further includes the IP address, the optional routing information of the first route further includes the MPLS label2. The first field set of the first NLRI further includes the IP address field, where the IP address field occupies 4 bytes. The second field set of the first NLRI further includes the second MPLS field.

In some embodiments, the first NLRI includes the first field set and the first indication information, and the first indication information indicates that the first NLRI does not include the second field set. Therefore, the length of the first NLRI is 1+1+8+1+6+1+4+3+1=26 bytes, which is less than 42 bytes, that is, less than the length of the NLRI in the case C.

In some embodiments, the first NLRI further includes the second field in the second field set. In this embodiment, the first indication information indicates that the first NLRI does not include the first field in the second field set, but includes the second field in the second field set. For example, it is assumed that the first field includes the Ethernet segment identifier field, and the second field includes the Ethernet tag identifier field and the second MPLS label field. Therefore, the length of the first NLRI is 1+1+8+1+6+1+4+3+1+4+3=33 bytes, which is less than 42 bytes, that is, less than the length of the NLRI in the case C.

Case D1: The first route is a compressed MAC-IPv6 route without an MPLS label2 (compressed MAC-IPv6 route without MPLS Label2). The uncompressed route corresponding to the first route is the MAC-IPv6 route without the MPLS label2 shown in the foregoing case D.

Refer to FIG. 8. In the case D1, the first NLRI is for transmitting MAC information and IP information, and does not carry the MPLS label2, where the IP information includes an IP address, and the IP address is an IPv6 address. In other words, the necessary routing information of the first route further includes the IP address, the optional routing information of the first route does not include the MPLS label2. The first field set of the first NLRI further includes the IP address field, where the IP address field occupies 16 bytes. The second field set of the first NLRI does not include the second MPLS field.

In some embodiments, the first NLRI includes the first field set and the first indication information, and the first indication information indicates that the first NLRI does not include the second field set. Therefore, the length of the first NLRI is 1+1+8+1+6+1+16+3+1=38 bytes, which is less than 51 bytes, that is, less than the length of the NLRI in the case D.

In some embodiments, the first NLRI further includes the second field in the second field set. In this embodiment, the first indication information indicates that the first NLRI does not include the first field in the second field set, but includes the second field in the second field set. The first field is an Ethernet segment identifier field, and the second field is an Ethernet tag identifier field; or the first field is an Ethernet tag identifier field, and the second field is an Ethernet segment identifier field. That is, the first NLRI further includes the Ethernet segment identifier field, and the length of the first NLRI is 1+1+8+1+6+1+16+3+1+10=48 bytes, which is less than 51 bytes, that is, less than the length of the NLRI in the case D. Alternatively, the first NLRI further includes the Ethernet tag identifier field. Therefore, the length of the first NLRI is 1+1+8+1+6+1+16+3+1+4=42 bytes, which is less than 51 bytes, that is, less than the length of the NLRI in the case D.

Case E1: The first route is a compressed MAC-IPv6 route with an MPLS label2 (compressed MAC-IPv6 route without MPLS Label2). The uncompressed route corresponding to the first route is the MAC-IPv6 route with the MPLS label2 shown in the foregoing case E.

Refer to FIG. 9. In the case E1, the first NLRI is for transmitting MAC information and IP information, and carries the MPLS label2, where the IP information includes an IP address, and the IP address is an IPv6 address. In other words, the necessary routing information of the first route further includes the IP address, the optional routing information of the first route further includes the MPLS label2. The first field set of the first NLRI further includes the IP address field, where the IP address field occupies 16 bytes. The second field set of the first NLRI further includes the second MPLS field.

In some embodiments, the first NLRI includes the first field set and the first indication information, and the first indication information indicates that the first NLRI does not include the second field set. Therefore, the length of the first NLRI is 1+1+8+1+6+1+16+3+1=38 bytes, which is less than 54 bytes, that is, less than the length of the NLRI in the case E.

In some embodiments, the first NLRI further includes the second field in the second field set. In this embodiment, the first indication information indicates that the first NLRI does not include the first field in the second field set, but includes the second field in the second field set. For example, it is assumed that the first field includes the Ethernet segment identifier field, and the second field includes the Ethernet tag identifier field and the second MPLS label field. Therefore, the length of the first NLRI is 1+1+8+1+6+1+16+3+1+4+3=45 bytes, which is less than 54 bytes, that is, less than the length of the NLRI in the case E.

When the first route carried in the first NLRI is a compressed IP prefix route, the first NLRI is compressed IP prefix NLRI, and the compressed IP prefix NLRI carries the compressed IP prefix route, that is, the first NLRI carries the compressed IP prefix route.

In some embodiments, refer to first NLRI (compressed IP prefix NLRI) shown in FIG. 10. A first field set of the first NLRI includes a route type field, a length field, a route identifier field, an IP prefix length field, an IP prefix field, and an MPLS label field. A second field set of the first NLRI includes an Ethernet segment identifier field, an Ethernet tag identifier field, and a gateway IP address field. Necessary routing information of a first route includes a route type, a specific routing information length, a route identifier, an IP prefix length, an IP prefix, and an MPLS label, where the route type is a compressed IP prefix route. Optional routing information of the first route includes an Ethernet segment identifier, an Ethernet tag identifier, and a gateway IP address.

When the first route is a compressed IP prefix route, the first route has at least the following two cases 11 and 12. The first routes in the two cases are both compressed routes, and uncompressed routes corresponding to the first routes are the two routes in the foregoing cases 1 and 2. The following uses an example in which a length of first indication information is 1 byte, and separately describes structures of the first routes and the first NLRI carrying the first routes in the two cases.

Case 11: The first route is a compressed IPv4 prefix route (compressed IPv4 Prefix route). The uncompressed route corresponding to the first route is the IPv4 prefix route shown in the foregoing case 1.

In the case 11, an IP prefix in the compressed IPv4 prefix route is an IPv4 prefix, and the gateway IP address is an IPv4 address, that is, both the IP prefix field carrying the IPv4 prefix and the gateway IP address field carrying the gateway IP address occupy 4 bytes.

In some embodiments, the first NLRI includes the first field set and the first indication information, and the first indication information indicates that the first NLRI does not include the second field set. Therefore, a length of the first NLRI is 1+1+8+1+4+3+1=18 bytes, which is less than 36 bytes, that is, less than the length of the NLRI in the case 1.

In some embodiments, the first NLRI further includes the second field in the second field set. In this embodiment, the first indication information indicates that the first NLRI does not include a first field in the second field set, but includes the second field in the second field set. For example, it is assumed that the first field is the Ethernet segment identifier field and the Ethernet tag identifier field, and the second field is the gateway IP address field. Therefore, the length of the first NLRI is 1+1+8+1+4+3+1+4=22 bytes, which is less than 36 bytes, that is, less than the length of the NLRI in the case 1.

Case 12: The first route is a compressed IPv6 prefix route (compressed IPv6 Prefix route). The uncompressed route corresponding to the first route is the IPv6 prefix route shown in the foregoing case 2.

In the case 12, an IP prefix in the compressed IPv6 prefix route is an IPv6 prefix, and the gateway IP address is an IPv6 address, that is, both the IP prefix field carrying the IPv6 prefix and the gateway IP address field carrying the gateway IP address occupy 16 bytes.

In some embodiments, the first NLRI includes the first field set and the first indication information, and the first indication information indicates that the first NLRI does not include the second field set. Therefore, a length of the first NLRI is 1+1+8+1+16+3+1=30 bytes, which is less than 60 bytes, that is, less than the length of the NLRI in the case 2.

In some embodiments, the first NLRI further includes the second field in the second field set. In this embodiment, the first indication information indicates that the first NLRI does not include the first field in the second field set, but includes the second field in the second field set. For example, it is assumed that the first field is the Ethernet segment identifier field and the Ethernet tag identifier field, and the second field is the gateway IP address field. Therefore, the length of the first NLRI is 1+1+8+1+16+3+1+16=46 bytes, which is less than 60 bytes, that is, less than the length of the NLRI in the case 2.

When the first route is a compressed Ethernet auto-discovery route, a compressed inclusive multicast Ethernet tag route, or a compressed Ethernet segment route, a structure of the first NLRI is the same as the structure of the compressed MAC/IP advertisement NLRI, which is not described herein again.

In some embodiments, the BGP message includes a plurality of pieces of NLRI, and a structure of each piece of NLRI is the structure of the first NLRI described above.

It should be noted that necessary routing information and optional routing information in an EVPN route are classified based on a communication standard. Optionally, the communication standard includes RFC 7432 and the like.

For example, the communication standard specifies a field that should be included in the NLRI in all scenarios, and specifies routing information carried in the field as necessary routing information. The field in the NLRI needs to be used in a part of scenarios specified in the communication standard. In another scenario other than the part of scenarios, a value of the field is set to a default value or an invalid value, and routing information carried in the field is specified as optional routing information. For example, the default value or the invalid value is 0 or f, that is, in the other scenarios, for a field whose value is set to all 0 or all f in the NLRI, the routing information carried in the field is specified as the optional routing information.

For example, for the foregoing Ethernet segment identifier, the Ethernet segment identifier represents an identifier of interface access, and is usually used in a scenario in which a CE is dual-homed or multi-homed to a PE. If the CE is single-homed to the PE, the Ethernet segment identifier may not be configured. If no Ethernet segment identifier is configured, a value of the Ethernet segment identifier field is all 0.

For the foregoing Ethernet tag identifier, the Ethernet tag identifier generally represents an accessed virtual local area network (virtual local area network, vlan). For a virtual local area network awareness (vlan-unaware) scenario specified in the communication standard, the value of the Ethernet tag identifier field is set to all 0.

For the MPLS label2, when a device needs to advertise an integrated routing and a bridging (integrated routing and bridging, IRB) route, the NLRI is required to carry the MPLS label2. In a scenario where only layer 2 communication is supported, when the mac-only route is advertised between the devices, the NLRI is not required to carry the MPLS Label2.

For the gateway IP address, when the IP prefix route uses an interface-ful (interface-ful) mode to advertise routes, the gateway IP address needs to be carried in the NLRI. In an interface-less (interface-less) scenario, the gateway IP address field in the NLRI is set to all 0.

Step 602. The first network device sends the BGP message to a second network device.

In some embodiments, a network connection is established between the first network device and the second network device, and the first network device sends the BGP message to the second device via the network connection.

Step 603. The second network device receives the BGP message, and obtains the first route carried in the first NLRI in the BGP message based on the first indication information in the BGP message.

In step 603, the second network device parses the BGP message to obtain the first NLRI, and parses the first field set of the first NLRI and the first indication information from the first NLRI. When the first indication information indicates that the first NLRI does not include the second field set, obtain the first route. The first route includes routing information carried in each field in the first field set. When the first indication information indicates that the first NLRI does not include the first field in the second field set, but includes the second field in the second field set, the first NLRI is parsed to obtain each second field indicated by the first indication information, to obtain the first route. The first route includes the routing information carried in each field in the first field set and routing information carried in each second field.

For example, it is assumed that the first NLRI is the NLRI listed in the foregoing case A1, the first NLRI includes the first field set and the first indication information, and the first indication information indicates that the first NLRI does not include the second field set. In other words, the first NLRI includes the route type field, the length field, the route identifier field, the MAC address length field, the MAC address field, the IP address length field, the first MPLS label field, and the first indication information. The route type field, the length field, the route identifier field, the MAC address length field, the MAC address field, the IP address length field, and the first MPLS label field respectively carry the route type, the specific routing information length, the route identifier, the MAC address length, the MAC address, the IP address length, and the MPLS label 1. Therefore, the first route obtained from the first NLRI includes the route type, the specific routing information length, the route identifier, the MAC address length, the MAC address, the IP address length, and the MPLS label 1.

For another example, the first NLRI includes the first field set and the first indication information, where the first indication information indicates that the first NLRI does not include the first field in the second field set, but includes the second field in the second field set. It is assumed that the first field is the Ethernet segment identifier field, the second field is the Ethernet tag identifier field, and the Ethernet tag identifier field carries the Ethernet tag identifier. Therefore, the first route obtained from the first NLRI includes the route type, the specific routing information length, the route identifier, the MAC address length, the MAC address, the IP address length, the MPLS label 1, and the Ethernet tag identifier.

In some embodiments, for the BGP message in the foregoing step 601, in addition to the structure described in the foregoing step 601, the BGP message may further have the following structure: The BGP message includes a plurality of pieces of NLRI. Each of the plurality of pieces of NLRI is for advertising a different route. The BGP message includes a common information field and a plurality of dedicated information fields. The common information field includes same information of the plurality of pieces of NLRI. The plurality of dedicated information fields are in a one-to-one correspondence with the plurality of pieces of NLRI. Each of the plurality of dedicated information fields carries information other than the same information in each piece of NLRI.

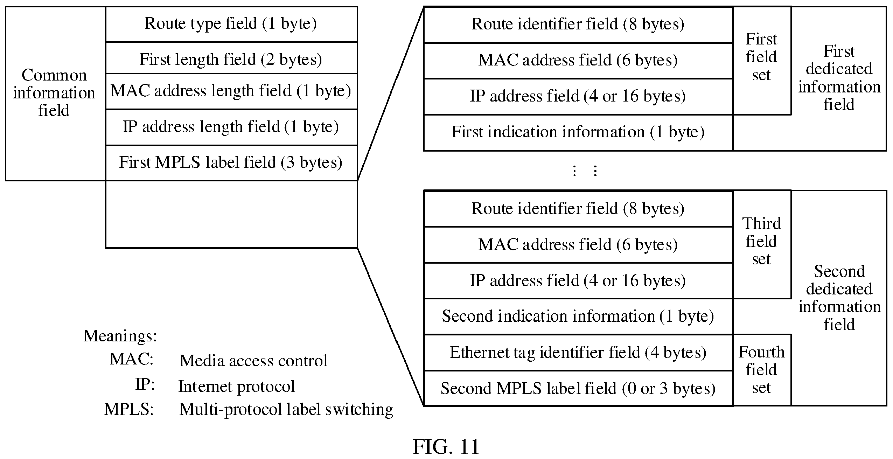

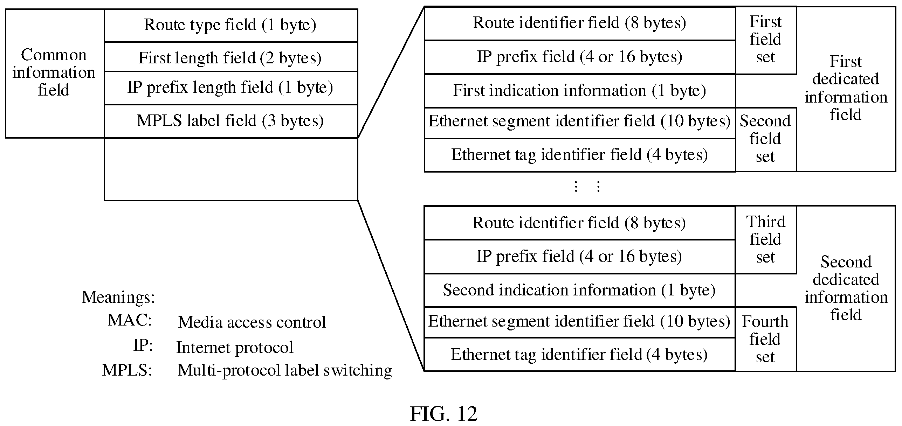

Refer to FIG. 11 or FIG. 12. The common information field includes at least one field, the same information includes at least one piece of routing information, and the at least one field carries the at least one piece of routing information.

The plurality of pieces of NLRI include first NLRI and second NLRI. The first NLRI is for advertising a first route, a dedicated information field corresponding to the first NLRI includes a first field set and first indication information, and each field in the first field set carries routing information other than the same information in necessary routing information of the first route. Therefore, the first field set does not include a field in the common information field.

In some embodiments, the first indication information indicates that the dedicated information field corresponding to the first NLRI does not include a second field set.

In some embodiments, the first indication information indicates that the dedicated information field corresponding to the first NLRI does not include a first field in the second field set, and indicates that the dedicated information field corresponding to the first NLRI includes a second field in the second field set. The first field is a part of fields in the second field set, and the second field is another field other than the first field in the second field set.

The second NLRI is for advertising a second route, a dedicated information field corresponding to the second NLRI includes a third field set and second indication information, and each field in the third field set carries routing information other than the same information in necessary routing information of the second route. Therefore, the third field set does not include a field in the common information field.

In some embodiments, the second indication information indicates that the dedicated information field corresponding to the second NLRI does not include a fourth field set, each field in the fourth field set carries optional routing information of the second route, and the fourth field set does not include the second indication information.

In some embodiments, the second indication information indicates that the dedicated information field corresponding to the second NLRI does not include a third field in the fourth field set, and indicates that the dedicated information field corresponding to the second NLRI includes a fourth field in the fourth field set. The third field is a part of fields in the fourth field set, and the fourth field is another field other than the third field in the fourth field set.

In some embodiments, the BGP message includes third NLRI, the third NLRI includes the common information field and the plurality of dedicated information fields, and the plurality of pieces of NLRI are a plurality of pieces of sub-NLRI in the third NLRI.

For example, refer to FIG. 11. The first route and the second route are compressed MAC/IP Advertisement Routes. It is assumed that the necessary routing information of the first route includes a route type, a MAC address length, an IP address length, an MPLS label 1, a route identifier, a MAC address, and an IP address. The necessary routing information of the second route includes a route type, a MAC address length, an IP address length, an MPLS label 1, a route identifier, a MAC address, and an IP address. The route type, the MAC address length, the IP address length, and the MPLS label 1 in the first route are respectively the same as the route type, the MAC address length, the IP address length, and the MPLS label 1 in the second route, and the route identifier, the MAC address, and the IP address in the first route are respectively different from the route identifier, the MAC address, and the IP address in the second route.

Therefore, the common information field includes a route type field, a MAC address length field, an IP address length field, and a first MPLS label field, and the route type field, the MAC address length field, the IP address length field, and the first MPLS label field respectively carry the route type, the MAC address length, the IP address length, and the MPLS label 1. The plurality of dedicated information fields include a first dedicated information field corresponding to the first NLRI and a second dedicated information field corresponding to the second NLRI. The first dedicated information field includes a route identifier field, a MAC address field, an IP address field, and the first indication information, and the first indication information indicates that the first dedicated information field does not include the second field set. The route identifier field, the MAC address field, and the IP address field respectively carry the route identifier, the MAC address, and the IP address in the first route. The second dedicated information field includes a route identifier field, a MAC address field, an IP address field, and the second indication information, and the second indication information indicates that the second dedicated field further includes an Ethernet tag identifier field and a second MPLS label field in the second field set. The route identifier field, the MAC address field, the IP address field, the Ethernet tag identifier field, and the second MPLS label field respectively carry the route identifier, the MAC address, the IP address, the Ethernet tag identifier, and the MPLS label2 in the second route.

For another example, refer to FIG. 12. The first route and the second route are compressed IP prefixes. It is assumed that the necessary routing information of the first route includes a route type, an IP prefix length, an MPLS label, a route identifier, and an IP prefix. The necessary routing information of the second route includes a route type, an IP prefix length, an MPLS label, a route identifier, and an IP prefix. The route type, the IP prefix length, and the MPLS label in the first route are respectively the same as the route type, the IP prefix length, and the MPLS label in the second route, and the route identifier and the IP prefix in the first route are respectively different from the route identifier and the IP prefix in the second route.

Therefore, the common information field includes a route type field, an IP prefix length field, and an MPLS label field, and the route type field, the IP prefix length field, and the MPLS label field respectively carry the route type, the IP prefix length, and the MPLS label. The plurality of dedicated information fields include a first dedicated information field corresponding to the first NLRI and a second dedicated information field corresponding to the second NLRI. The first dedicated information field includes the route identifier field, an IP prefix field, and the first indication information. The first indication information indicates that the first dedicated information field further includes an Ethernet segment identifier field and an Ethernet tag identifier field. The route identifier field, the IP prefix field, the Ethernet segment identifier field, and the Ethernet tag identifier field respectively carry the route identifier, the IP prefix, the Ethernet segment identifier, and the Ethernet tag identifier in the first route. The second dedicated information field includes the route identifier field, an IP prefix field, and the second indication information. The second indication information indicates that the second dedicated information field further includes an Ethernet segment identifier field and an Ethernet tag identifier field. The route identifier field, the IP prefix field, the Ethernet segment identifier field, and the Ethernet tag identifier field respectively carry the route identifier, the IP prefix, the Ethernet segment identifier, and the Ethernet tag identifier in the second route.

In some embodiments, refer to FIG. 11 or FIG. 12. The common information field includes a first length field, and the first length field carries a first information length. The first information length is a total length of the common information field and the plurality of dedicated information fields. A length of the first length field is greater than or equal to 1 byte. For example, the first length field occupies 2 bytes.

In some embodiments, the common information field includes the first length field and a second length field. The first length field includes a length of the common information field, the second length field carries a second information length, and the second information length is a total length of the plurality of dedicated information fields. The first length field occupies 1 byte, and a length of the second length field is greater than or equal to 1 byte.

In some embodiments, the first indication information includes a plurality of bits, and the first indication information indicates, in a bit mapping manner, that the dedicated information field corresponding to the first NLRI does not include the first field.

In some embodiments, the first indication information is one field, and the first indication information indicates, in an enumeration manner, that the dedicated information field corresponding to the first NLRI does not include the first field.

In some embodiments, the second indication information also includes a plurality of bits, and the second indication information indicates, in a bit mapping manner, that the dedicated information field corresponding to the second NLRI does not include the third field.

In some embodiments, the second indication information is also one field, and the second indication information indicates, in an enumeration manner, that the dedicated information field corresponding to the second NLRI does not include the third field.

In some embodiments, for the foregoing step 603, the second network device obtains the plurality of routes from the common information field and the plurality of dedicated information fields in the BGP message. During implementation, the second network device parses the BGP message to obtain the common information field, and parses the BGP message based on the first information length included in the common information field or the length of the common information field and the second information length included in the common information field, to obtain the plurality of dedicated information fields. The plurality of dedicated information fields include the first dedicated information field corresponding to the first NLRI and the second dedicated information field corresponding to the second NLRI. The second network device parses the first field set of the first NLRI and the first indication information from the first dedicated information field. When the first indication information indicates that the first dedicated information field does not include the second field set, obtain the first route. The first route includes each piece of routing information carried in the common information field and routing information carried in each field in the first field set. When the first indication information indicates that the first dedicated information field does not include the first field in the second field set, but includes the second field in the second field set, each second field indicated by the first indication information is obtained by parsing the first dedicated information field, to obtain the first route. The first route includes each piece of routing information carried in the common information field, the routing information carried in each field in the first field set, and routing information carried in each second field.

Likewise, the third field set of the second NLRI and the second indication information are parsed from the second dedicated information field. When the second indication information indicates that the second dedicated information field does not include the fourth field set, obtain the second route. The second route includes each piece of routing information carried in the common information field and routing information carried in each field in the third field set. When the second indication information indicates that the second dedicated information field does not include the third field in the fourth field set, but includes the fourth field in the third field set, each fourth field indicated by the second indication information is obtained by parsing the second dedicated information field, to obtain the first route. The first route includes each piece of routing information carried in the common information field, routing information carried in each field in the third field set, and routing information carried in each fourth field.

For example, refer to FIG. 11. The second network device parses the BGP message to obtain the common information field and the plurality of dedicated information fields. The common information field includes the route type field, the MAC address length field, the IP address length field, and the first MPLS label field. The route type field, the MAC address length field, the IP address length field, and the first MPLS label field respectively carry the route type, the MAC address length, the IP address length, and the MPLS label1. The first dedicated information field includes the route identifier field, the MAC address field, the IP address field, and the first indication information, and the first indication information indicates that the first dedicated information field does not include the second field set. In this case, the obtained first route includes the route type, the MAC address length, the IP address length, the MPLS label 1, the route identifier, the MAC address, and the IP address. The second dedicated information field includes the route identifier field, the MAC address field, the IP address field, and the second indication information. The second indication information indicates that the second dedicated information field further includes the Ethernet tag identifier field and the second MPLS label field. In this case, the obtained second route includes the route type, the MAC address length, the IP address length, the MPLS label 1, the route identifier, the MAC address, the IP address, the Ethernet tag identifier, and the MPLS label2.

In embodiments of this application, the BGP message includes the first NLRI, and the first NLRI is for advertising the first route. The first NLRI includes the first field set and the first indication information, and each field in the first field set carries the necessary routing information of the first route. The first indication information indicates that the first NLRI does not include the second field set, or indicates that the first NLRI includes some fields in the second field set, and each field in the second field set carries the optional routing information of the first route. In this way, the device receiving the BGP message may parse a route carried in the first NLRI based on the first indication information, where the parsed route includes the necessary routing information of the first route, and it is ensured that the parsed route can be normally used. Because the first NLRI may not include the first field set or include some fields in the second field set, the length of the first NLRI may be reduced, to enable the BGP message to include more first NLRI, and enable the BGP message to include more routes, thereby improving route transmission efficiency. In addition, the BGP message includes the common information field and the plurality of dedicated information fields. The plurality of dedicated information fields are in the one-to-one correspondence with the plurality of pieces of NLRI. The common information field includes the same information of the plurality of pieces of NLRI. The plurality of pieces of NLRI include the first NLRI and the second NLRI. The dedicated information field corresponding to the first NLRI includes the first field set and the first indication information, and each field in the first field set carries other information other than the same information in the necessary routing information of the first route. The first indication information indicates that the dedicated information field corresponding to the first NLRI does not include the second field set, or indicates that the dedicated information field corresponding to the first NLRI includes some fields in the second field set, and each field in the second field set carries the optional routing information of the first route. The dedicated information field corresponding to the second NLRI includes the third field set and the second indication information, and each field in the third field set carries other information other than the same information in the necessary routing information of the second route. The second indication information indicates that the dedicated information field corresponding to the second NLRI does not include the third field set, or indicates that the dedicated information field corresponding to the second NLRI includes some fields in the fourth field set, and each field in the fourth field set carries the optional routing information of the second route. In this way, each piece of NLRI may be further compressed, and a length of a dedicated information field corresponding to each piece of NLRI is reduced, to enable the BGP message to include more NLRI, and enable the BGP message to include more routes, thereby further improving route transmission efficiency.

The foregoing describes the methods in embodiments of this application. The following describes apparatuses in the embodiments of this application. It should be understood that the apparatuses described below have any functions of the first network device or the second network device in the foregoing methods.

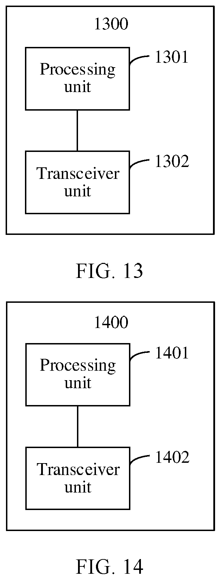

Refer to FIG. 13. Embodiments of this application provide an apparatus 1300 for transmitting network layer reachability information NLRI. The apparatus 1300 is deployed on the first network device in the network architecture 100 shown in FIG. 1, or is deployed on the first network device provided in the embodiment 600 shown in FIG. 6. The apparatus includes a processing unit 1301 and a transceiver unit 1302.

The processing unit 1301 is configured to obtain a border gateway protocol BGP message, where the BGP message includes first NLRI that is for advertising a first route. The first NLRI includes a first field set and first indication information. The first field set carries necessary routing information of the first route, and the first indication information indicates that the first NLRI does not include a first field in a second field set. Each field in the second field set carries optional routing information of the first route. The second field set does not include the first indication information.

The transceiver unit 1302 is configured to send the BGP message to a second communication apparatus.

Optionally, for a detailed implementation process in which the processing unit 1301 obtains the BGP message, refer to related content in step 601 in the method 600 shown in FIG. 6. Details are not described herein again.

Optionally, the first indication information further indicates that the first NLRI includes a second field in the second field set.

Optionally, the first indication information includes a plurality of bits, and the first indication information indicates, in a bit mapping manner, that the first NLRI does not include the first field.

Optionally, the first indication information indicates, in an enumeration manner, that the first NLRI does not include the first field.

Optionally, the first indication information indicates that the first NLRI does not include the first field in the bit mapping manner or the enumeration manner. For detailed description, refer to related content in step 601 in the method 600 shown in FIG. 6. Details are not described herein again.

Optionally, the BGP message includes a plurality of pieces of NLRI, and the plurality of pieces of NLRI include the first NLRI and second NLRI. The BGP message includes a common information field and a plurality of dedicated information fields. The common information field carries same information of the plurality of pieces of NLRI, and the plurality of dedicated information fields are in a one-to-one correspondence with the plurality of pieces of NLRI. Each of the plurality of dedicated information fields carries information other than the same information of each of the plurality of pieces of NLRI.

Optionally, for detailed descriptions of the common information field and the dedicated information fields, refer to related content in step 601 in the method 600 shown in FIG. 6. Details are not described herein again.

Optionally, the BGP message includes third NLRI. The third NLRI includes the common information field and the dedicated information fields, and the plurality of pieces of NLRI are a plurality of pieces of sub-NLRI in the third NLRI.

Optionally, the first route is a first Ethernet virtual private network EVPN route, and the first NLRI is first EVPN NLRI.

Optionally, an encoding format of the first EVPN NLRI is different from an encoding format of EVPN NRLI defined in RFC 7432.

Optionally, the first EVPN NLRI includes a route type field, and the first EVPN route indicated by the route type field is:
a compressed media access control/internet protocol advertisement route MAC/IP Advertisement Route;
a compressed IP prefix route;
a compressed Ethernet auto-discovery route Ethernet Auto-discovery Route;
a compressed inclusive multicast Ethernet tag route Inclusive Multicast Ethernet Tag Route; or
a compressed Ethernet segment route Ethernet Segment Route.

Optionally, when the first EVPN route is the compressed MAC/IP advertisement route, the necessary routing information includes a route type, a specific routing information length, a route identifier, a MAC address length, a MAC address, a layer 2 multi-protocol label switching label MPLS label 1, and an IP address length.

Optionally, the necessary routing information further includes an internet protocol version 4 IPv4 address or an internet protocol version 6 IPv6 address.

Optionally, when the first EVPN route is the compressed MAC/IP advertisement route, the optional routing information includes an Ethernet segment identifier and an Ethernet tag identifier.

Optionally, the optional routing information further includes an MPLS label2.

Optionally, when the first EVPN route is the compressed IP prefix route, the necessary routing information includes a routing type, a specific routing information length, a route identifier, an IP prefix length, an IP prefix, and an MPLS label.

Optionally, the optional routing information includes an Ethernet segment identifier, an Ethernet tag identifier, and a gateway IP address.

In embodiments of this application, the first NLRI in the BGP message obtained by the processing unit includes the first field set and the first indication information, and each field in the first field set carries the necessary routing information of the first route. The transceiver unit sends the BGP message to the second communication apparatus, to enable the second communication apparatus to parse the first NLRI, to obtain the necessary routing information of the first route, and ensure that the second communication apparatus can normally use the first route. Because the first indication information indicates that the second NLRI does not include the first field in the second field set, and each field in the second field set carries the optical routing information of the first route, a length of the first NLRI is reduced, so that a quantity of pieces of NLRI included in the BGP message is increased, to increase a quantity of routes included in the BGP message, and improve route transmission efficiency.

Refer to FIG. 14. Embodiments of this application provide an apparatus 1400 for transmitting network layer reachability information NLRI. The apparatus 1400 is deployed on the second network device in the network architecture 100 shown in FIG. 1, or is deployed on the second network device provided in the embodiment 600 shown in FIG. 6. The apparatus includes a processing unit 1401 and a transceiver unit 1402, where
the transceiver unit 1402 is configured to receive a border gateway protocol BGP message, where the BGP message includes first NLRI that is for advertising a first route, the first NLRI includes a first field set and first indication information, the first field set carries necessary routing information of the first route, and the first indication information indicates that the first NLRI does not include a first field in a second field set, where each field in the second field set carries optional routing information of the first route, and the second field set does not include the first indication information; and
the processing unit 1401 is configured to obtain the first route based on the BGP message.

Optionally, for a detailed implementation process in which the processing unit 1401 obtains the first route, refer to related content in step 603 in the method 600 shown in FIG. 6. Details are not described herein again.

Optionally, for detailed descriptions of the BGP message, refer to related content in step 601 in the method 600 shown in FIG. 6. Details are not described herein again.

Optionally, the first indication information further indicates that the first NLRI includes a second field in the second field set.

Optionally, the processing unit 1401 is configured to:
parse the BGP message, to obtain the first field set and the first indication information;
obtain the first route when the first indication information indicates that the first NLRI does not include the second field set, where the first route includes routing information carried in each field in the first field set; or
obtain the first route when the first indication information indicates that the first NLRI further includes the second field in the second field set, where the first route includes the routing information carried in each field in the first field set and routing information carried in the second field.

Optionally, for a detailed implementation process in which the processing unit 1401 obtains the first route when the first NLRI does not include the second field set or the first NLRI includes the second field set, refer to related content in step 603 in the method 600 shown in FIG. 6. Details are not described herein again.

Optionally, the first indication information includes a plurality of bits, and the first indication information indicates, in a bit mapping manner, that the first NLRI does not include the first field.

Optionally, the first indication information indicates, in an enumeration manner, that the first NLRI does not include the first field.

Optionally, the first indication information indicates that the first NLRI does not include the first field in the bit mapping manner or the enumeration manner. For detailed description, refer to related content in step 601 in the method 600 shown in FIG. 6. Details are not described herein again.

Optionally, the BGP message includes a plurality of pieces of NLRI, and the plurality of pieces of NLRI include the first NLRI and second NLRI. The BGP message includes a common information field and a plurality of dedicated information fields. The common information field carries same information of the plurality of pieces of NLRI, and the plurality of dedicated information fields are in a one-to-one correspondence with the plurality of pieces of NLRI. Each of the plurality of dedicated information fields carries information other than the same information of each of the plurality of pieces of NLRI.

Optionally, for detailed descriptions of the common information field and the dedicated information fields, refer to related content in step 601 in the method 600 shown in FIG. 6. Details are not described herein again.

Optionally, the BGP message includes third NLRI. The third NLRI includes the common information field and the dedicated information fields, and the plurality of pieces of NLRI are a plurality of pieces of sub-NLRI in the third NLRI.

Optionally, the first route is a first Ethernet virtual private network EVPN route, and the first NLRI is first EVPN NLRI.

Optionally, an encoding format of the first EVPN NLRI is different from an encoding format of EVPN NRLI defined in RFC 7432.

Optionally, the first EVPN NLRI includes a route type field, and the first EVPN route indicated by the route type field is:
a compressed media access control/internet protocol advertisement route MAC/IP Advertisement Route;
a compressed IP prefix route;
a compressed Ethernet auto-discovery route Ethernet Auto-discovery Route;
a compressed inclusive multicast Ethernet tag route Inclusive Multicast Ethernet Tag Route; or
a compressed Ethernet segment route Ethernet Segment Route.

Optionally, when the first EVPN route is the compressed MAC/IP advertisement route, the necessary routing information includes a route type, a specific routing information length, a route identifier, a MAC address length, a MAC address, a layer 2 multi-protocol label switching label MPLS label 1, and an IP address length.

Optionally, the necessary routing information further includes an internet protocol version 4 IPv4 address or an internet protocol version 6 IPv6 address.

Optionally, when the first EVPN route is the compressed MAC/IP advertisement route, the optional routing information includes an Ethernet segment identifier and an Ethernet tag identifier.

Optionally, the optional routing information further includes an MPLS label2.

Optionally, when the first EVPN route is the compressed IP prefix route, the necessary routing information includes a routing type, a specific routing information length, a route identifier, an IP prefix length, an IP prefix, and an MPLS label.

Optionally, the optional routing information includes an Ethernet segment identifier, an Ethernet tag identifier, and a gateway IP address.

In embodiments of this application, the first NLRI in the BGP message includes the first field set and the first indication information, and each field in the first field set carries the necessary routing information of the first route. In this way, after the transceiver unit receives the BGP message, the processing unit can obtain the necessary routing information of the first route by parsing the first NLRI in the BGP message, to ensure that the first route can be normally used. Because the first indication information indicates that the first NLRI does not include the first field in the second field set, and each field in the second field set carries the optical routing information of the first route, a length of the first NLRI is reduced, so that a quantity of pieces of NLRI included in the BGP message is increased, to increase a quantity of routes included in the BGP message, and improve route transmission efficiency.

In correspondence to the method embodiments and the virtual apparatus embodiments provided in this application, an embodiment of this application further provides a network device. The following describes a hardware structure of the network device.

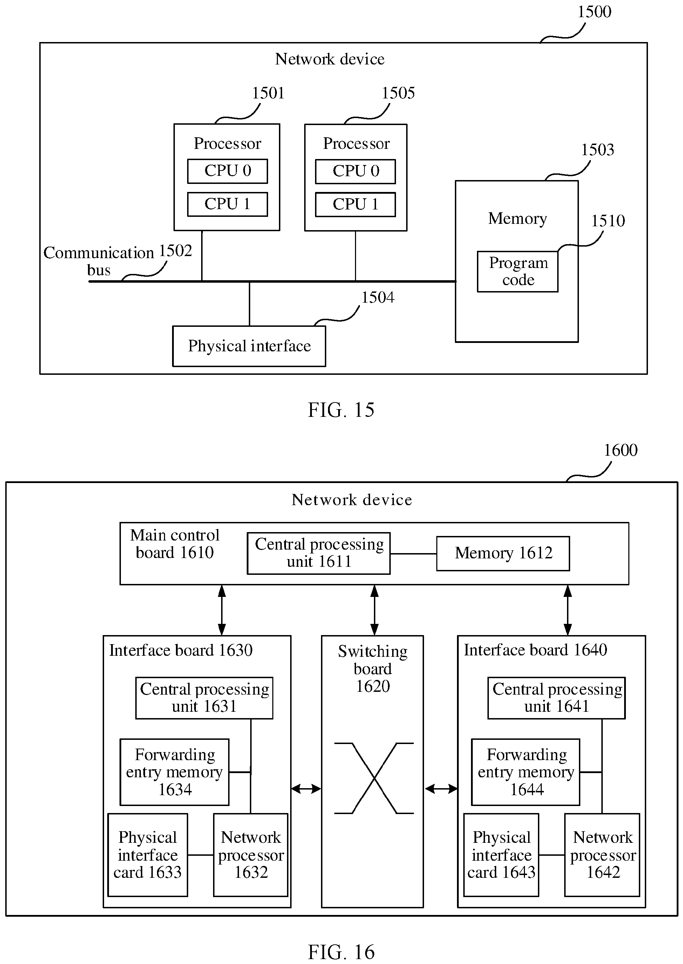

Refer to FIG. 15. FIG. 15 is a schematic structural diagram of a network device 1500 according to an embodiment of this application. The network device 1500 may be configured as the first network device or the second network device.

The network device 1500 includes at least one processor 1501, a communication bus 1502, a memory 1503, and at least one physical interface 1504.

The processor 1501 may be a general-purpose central processing unit (central processing unit, CPU), a network processor (network processor, NP), a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The communication bus 1502 is configured to transfer information between the foregoing components. The communication bus 1502 may be classified into an address bus, a data bus, a control bus, and the like. For ease of representation, only one thick line is used to represent the bus in the figure, but this does not mean that there is only one bus or only one type of bus.

The memory 1503 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only Memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. This is not limited thereto. The memory 1503 may exist independently, and is connected to the processor 1501 via the communication bus 1502. Alternatively, the memory 1503 may be integrated into the processor 1501.

The physical interface 1504 uses any apparatus such as a transceiver, and is configured to communicate with another device or communication network. The physical interface 1504 includes a wired communication interface, and may further include a wireless communication interface. The wired communication interface may be, for example, an Ethernet interface. The Ethernet interface may be an optical interface, an electrical interface, or a combination thereof. The wireless communication interface may be, for example, a wireless local area network (wireless local area networks, WLAN) interface, a cellular network communication interface, or a combination thereof. The physical interface 1504 is also referred to as a physical port.

During a specific implementation, in an embodiment, the processor 1501 may include one or more CPUs, for example, a CPU 0 and a CPU 1 shown in FIG. 15.

During a specific implementation, in an embodiment, the network device 1500 may include a plurality of processors, for example, the processor 1501 and a processor 1505 shown in FIG. 15. Each of the processors may be a single-core processor (single-CPU) or a multi-core processor (multi-CPU). The processor herein may be one or more devices, circuits, and/or processing cores configured to process data (for example, computer program instructions).

During a specific implementation, in an embodiment, the network device 1500 may further include an output device 1506 and an input device 1507. The output device 1506 communicates with the processor 1501, and may display information in a plurality of manners. For example, the output device 1506 may be a liquid crystal display (liquid crystal display, LCD), a light emitting diode (light emitting diode, LED) display device, a cathode ray tube (cathode ray tube, CRT) display device, a projector (projector), or the like. The input device 1507 communicates with the processor 1501, and may receive user input in a plurality of manners. For example, the input device 1507 may be a mouse, a keyboard, a touchscreen device, or a sensing device.

In some embodiments, the memory 1503 is configured to store program code 1510 for performing the solutions in this application, and the processor 1501 may execute the program code 1510 stored in the memory 1503 to implement a corresponding function. For example, a program stored in the program code 1510 may be invoked to implement a function of a generation module 1001 in an apparatus 1000, or implement a function of a determining module 1102 in an apparatus 1100. In other words, the network device 1500 may implement, by using the processor 1501 and the program code 1510 in the memory 1503, the method provided in the foregoing method embodiments.

The network device 1500 in embodiments of this application may correspond to the first network device or the second network device in the foregoing method embodiments. In addition, the processor 1501, the physical interface 1504, and the like in the network device 1500 may implement functions of the first network device or the second network device in the foregoing method embodiments and/or various steps and methods implemented by the first network device or the second network device. For brevity, details are not described herein again.

In some embodiments, the processing unit 1301 in the apparatus 1300 is equivalent to the processor 1501 in the network device 1500, and the transceiver unit 1302 in the apparatus 1200 is equivalent to the physical interface 1504 in the network device 1500.

In some embodiments, the processing unit 1401 in the apparatus 1400 is equivalent to the processor 1501 in the network device 1500, and the transceiver unit 1402 in the apparatus 1400 is equivalent to the physical interface 1504 in the network device 1500.

Refer to FIG. 16. FIG. 16 is a schematic structural diagram of a network device 1600 according to an embodiment of this application. The network device 1600 may be configured as the first network device or the second network device.

The network device 1600 includes a main control board 1610 and an interface board 1630.

The main control board 1610 is also referred to as a main processing unit (main processing unit, MPU) or a route processing card (route processor card). The main control board 1610 controls and manages components in the network device 1600, including functions such as route computation, device management, device maintenance, and protocol processing. The main control board 1610 includes a central processing unit 1611 and a memory 1612.

The interface board 1630 is also referred to as a line interface unit card (line processing unit, LPU), a line card (line card), or a service board. The interface board 1630 is configured to provide various service interfaces, and forward a data packet. The service interface includes but is not limited to an Ethernet interface, a POS (Packet over SONET/SDH) interface, and the like. The Ethernet interface is, for example, a flexible Ethernet service interface (Flexible Ethernet Clients, FlexE Clients). The interface board 1630 includes a central processing unit 1631, a network processor 1632, a forwarding entry memory 1634, and a physical interface card (physical interface card, PIC) 1633.

The central processing unit 1631 on the interface board 1630 is configured to control and manage the interface board 1630, and communicate with the central processing unit 1611 on the main control board 1610.

The network processor 1632 is configured to implement packet forwarding processing. A form of the network processor 1632 may be a forwarding chip. Specifically, processing on an uplink packet includes processing at a packet ingress interface and forwarding table lookup, and processing on a downlink packet includes forwarding table lookup and the like.

The physical interface card 1633 is configured to implement an interconnection function of a physical layer. Original traffic enters the interface board 1630 through the physical interface card, and a processed packet is sent from the physical interface card 1633. The physical interface card 1633 includes at least one physical interface, and the physical interface is also referred to as a physical port. The physical interface card 1633 is also referred to as a subcard, and may be installed on the interface board 1630, and is responsible for converting an optical/electrical signal into a packet, performing a validity check on the packet, and forwarding the packet to the network processor 1632 for processing. In some embodiments, the central processing unit 1631 of the interface board 1603 may also perform a function of the network processor 1632, for example, implement software forwarding based on a general-purpose CPU. Therefore, the network processor 1632 is not required in the physical interface card 1633.

Optionally, the network device 1600 includes a plurality of interface boards. For example, the network device 1600 further includes an interface board 1640. The interface board 1640 includes a central processing unit 1641, a network processor 1642, a forwarding entry memory 1644, and a physical interface card 1643.

Optionally, the network device 1600 further includes a switching board 1620. The switching board 1620 may also be referred to as a switch fabric unit (switch fabric unit, SFU). When the network device has a plurality of interface boards 1630, the switching board 1620 is configured to complete a data exchange between the interface boards. For example, the interface board 1630 and the interface board 1640 may communicate with each other via the switching board 1620.

The main control board 1610 is coupled to the interface board 1630. For example, the main control board 1610, the interface board 1630, the interface board 1640, and the switching board 1620 are connected to a system backplane through a system bus to implement interworking. In a possible implementation, an inter-process communication (inter-process communication, IPC) channel is established between the main control board 1610 and the interface board 1630, and communication is performed between the main control board 1610 and the interface board 1630 through the IPC channel.

Logically, the network device 1600 includes a control plane and a forwarding plane. The control plane includes the main control board 1610 and the central processing unit 1631. The forwarding plane includes components for forwarding, for example, the forwarding entry memory 1634, the physical interface card 1633, and the network processor 1632. The control plane performs functions such as a function of a router, generating a forwarding table, processing signaling and protocol packets, and configuring and maintaining a status of a device. The control plane delivers the generated forwarding table to the forwarding plane. On the forwarding plane, the network processor 1632 searches the forwarding table delivered by the control plane to forward a packet received by the physical interface card 1633. The forwarding table delivered by the control plane may be stored in the forwarding entry memory 1634. In some embodiments, the control plane and the forwarding plane may be completely separated, and are not on a same device.

If the network device 1600 is configured as a first network device, the central processing unit 1611 generates a BGP message. The network processor 1632 triggers the physical interface card 1633 to send the BGP message to a second network device.

If the network device 1600 is configured as a second network device, the network processor 1632 receives a BGP message from the physical interface card 1633, and obtains a route based on the BGP message.

It should be understood that the processing unit 1301 in the apparatus 1300 is equivalent to the central processing unit 1611 or the central processing unit 1631 in the network device 1600, and the transceiver unit 1302 in the apparatus 1300 is equivalent to the physical interface card 1633 or the physical interface card 1643 in the network device 1600.

It should be understood that the processing unit 1401 in the apparatus 1400 is equivalent to the central processing unit 1611 or the central processing unit 1631 in the network device 1600, and the transceiver unit 1402 in the apparatus 1300 is equivalent to the physical interface card 1633 or the physical interface card 1643 in the network device 1600.

It should be understood that, in embodiments of this application, operations on the interface board 1640 are the same as operations on the interface board 1630. For brevity, details are not described again. It should be understood that the network device 1600 in embodiments of this application may correspond to the first network device or the second network device in the foregoing method embodiments. The main control board 1610, the interface board 1630, and/or the interface board 1640 in the network device 1600 may implement functions of the first network device or the second network device in the foregoing method embodiments and/or various steps implemented by the first network device or the second network device. For brevity, details are not described again.

It should be noted that, there may be one or more main control boards. When there are a plurality of main control boards, the main control boards may include an active main control board and a standby main control board. There may be one or more interface boards. A network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board provides a function of processing service data in an entire system. In a distributed forwarding architecture, the network device may have at least one switching board, and a data exchange between a plurality of interface boards is implemented via the switching board, to provide a large-capacity data exchange and processing capability. Therefore, a data access and processing capability of a network device in the distributed architecture is better than that of a device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined into one central processing unit on the card, to perform functions obtained after the two central processing units are combined. The device in this form (for example, a network device such as a low-end switch or router) has a weak data exchange and processing capability. A specific architecture that is to be used depends on a specific networking deployment scenario. This is not limited herein.

In some possible embodiments, the first network device or the second network device may be implemented as a virtualized device. For example, the virtualized device may be a virtual machine (virtual machine, VM) that runs a program used for sending a packet, and the virtual machine is deployed on a hardware device (for example, a physical server). The virtual machine is a complete software-simulated computer system that has complete hardware system functions and that runs in an entirely isolated environment. The virtual machine may be configured as a first network device or a second network device. For example, the first network device or the second network device may be implemented based on a general-purpose physical server in combination with a network functions virtualization (network functions virtualization, NFV) technology. The first network device or the second network device is a virtual host, a virtual router, or a virtual switch. After reading this application, with reference to the NFV technology, a person skilled in the art may virtualize, on the general-purpose physical server, the first network device or the second network device having the foregoing functions. Details are not described herein.

It should be understood that the network devices in the foregoing product forms separately have any function of the first network device or the second network device in the foregoing method embodiments, and details are not described herein.

Embodiments of this application provide a computer program product. When the computer program product is run on a network device, the network device is enabled to perform the method performed by the first network device in the foregoing method embodiments.

Embodiments of this application provide a computer program product. When the computer program product is run on a network device, the network device is enabled to perform the method performed by the second network device in the foregoing method embodiments.

Embodiments of this application further provide a chip, including a processor and an interface circuit. The interface circuit is configured to receive instructions and transmit the instructions to the processor. The processor may be configured to perform the foregoing application to indicate a first network device or a second network device to perform a method for transmitting network layer reachability information. The processor is coupled to a memory. The memory is configured to store a program or instructions. When the program or the instructions are performed by the processor, the chip system is enabled to implement the method in any one of the foregoing method embodiments.

Optionally, there may be one or more processors in the chip system. The processor may be implemented by using hardware, or may be implemented by using software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system on chip (system on chip, SoC), a CPU, an NP, a digital signal processor (digital signal processor, DSP), a micro controller unit (micro controller unit, MCU), a programmable logic device (programmable logic device, PLD), or another integrated chip.

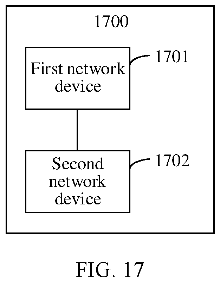

Refer to FIG. 17. Embodiments of this application provide a system 1700 for transmitting network layer reachability information NLRI, including a first network device 1701 and a second network device 1702.

The first network device 1701 may be the first network device provided in the embodiment shown in FIG. 1 or FIG. 6, and the second network device 1702 may be the second network device provided in the embodiment shown in FIG. 1 or FIG. 6. Alternatively, the first network device 1701 may be the apparatus 1300 provided in the embodiment shown in FIG. 13, and the second network device 1702 may be the apparatus 1400 provided in the embodiment shown in FIG. 14.

In some possible embodiments, the first network device 1701 is configured to implement an operation performed by the first network device in the foregoing method embodiment 600, and the second network device 1701 is configured to implement an operation performed by the first network device in the foregoing method embodiment 600. For example, the first network device 1701 is configured to obtain a BGP message, where the BGP message includes first NLRI that is for advertising a first route. The first NLRI includes a first field set and first indication information, where the first field set carries necessary routing information of the first route, and the first indication information indicates that the first NLRI does not include a first field in a second field set. Each field in the second field set carries optional routing information of the first route. The second field set does not include the first indication information. The BGP message is sent to the second network device 1702. The second network device 1702 receives the BGP message, and obtains the first route based on the BGP message.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are only optional embodiments of this application, but are not intended to limit this application. Any modification, equivalent replacement, or improvement made within the principle of this application should fall within the protection scope of this application.

## Claims

1. A method for transmitting network layer reachability information NLRI, performed by a first communication apparatus, wherein the method comprises:
obtaining a border gateway protocol BGP message, wherein the BGP message comprises first NLRI that is for advertising a first route, the first NLRI comprises a first field set and first indication information, the first field set carries necessary routing information of the first route, and the first indication information indicates that the first NLRI does not comprise a first field in a second field set, wherein each field in the second field set carries optional routing information of the first route, and the second field set does not comprise the first indication information; and
sending the BGP message to a second communication apparatus.

2. The method according to claim 1, wherein the first indication information further indicates that the first NLRI comprises a second field in the second field set.

3. The method according to claim 1 or 2, wherein the first indication information comprises a plurality of bits, and the first indication information indicates, in a bit mapping manner, that the first NLRI does not comprise the first field.

4. The method according to claim 1 or 2, wherein the first indication information indicates, in an enumeration manner, that the first NLRI does not comprise the first field.

5. The method according to any one of claims 1 to 4, wherein the BGP message comprises a plurality of pieces of NLRI, the plurality of pieces of NLRI comprise the first NLRI and second NLRI, and the BGP message comprises a common information field and a plurality of dedicated information fields, wherein the common information field carries same information of the plurality of pieces of NLRI, the plurality of dedicated information fields are in a one-to-one correspondence with the plurality of pieces of NLRI, each of the plurality of dedicated information fields carries information other than the same information of each of the plurality of pieces of NLRI.

6. The method according to claim 5, wherein the BGP message comprises third NLRI, wherein the third NLRI comprises the common information field and the dedicated information fields, and the plurality of pieces of NLRI are a plurality of pieces of sub-NLRI in the third NLRI.

7. The method according to any one of claims 1 to 6, wherein the first route is a first Ethernet virtual private network EVPN route, and the first NLRI is first EVPN NLRI.

8. The method according to claim 7, wherein an encoding format of the first EVPN NLRI is different from an encoding format of EVPN NRLI defined in RFC 7432.

9. The method according to claim 7 or 8, wherein the first EVPN NLRI comprises a route type field, and the first EVPN route indicated by the route type field is:
a compressed media access control/internet protocol advertisement route MAC/IP Advertisement Route;
a compressed IP prefix route;
a compressed Ethernet auto-discovery route Ethernet Auto-discovery Route;
a compressed inclusive multicast Ethernet tag route Inclusive Multicast Ethernet Tag Route; or
a compressed Ethernet segment route Ethernet Segment Route.

10. The method according to claim 9, wherein when the first EVPN route is the compressed MAC/IP advertisement route, the necessary routing information comprises a route type, a specific routing information length, a route identifier, a MAC address length, a MAC address, a layer 2 multi-protocol label switching label MPLS label 1, and an IP address length.

11. The method according to claim 10, wherein the necessary routing information further comprises an internet protocol version 4 IPv4 address or an internet protocol version 6 IPv6 address.

12. The method according to any one of claims 9 to 11, wherein when the first EVPN route is the compressed MAC/IP advertisement route, the optional routing information comprises an Ethernet segment identifier and an Ethernet tag identifier.

13. The method according to claim 12, wherein the optional routing information further comprises an MPLS label2.

14. The method according to claim 9, wherein when the first EVPN route is the compressed IP prefix route, the necessary routing information comprises a route type, a specific routing information length, a route identifier, an IP prefix length, an IP prefix, and an MPLS label.

15. The method according to claim 14, wherein the optional routing information comprises an Ethernet segment identifier, an Ethernet tag identifier, and a gateway IP address.

16. A method for transmitting network layer reachability information NLRI, performed by a first communication apparatus, wherein the method comprises:
receiving a border gateway protocol BGP message, wherein the BGP message comprises first NLRI that is for advertising a first route, the first NLRI comprises a first field set and first indication information, the first field set carries necessary routing information of the first route, and the first indication information indicates that the first NLRI does not comprise a first field in a second field set, wherein each field in the second field set carries optional routing information of the first route, and the second field set does not comprise the first indication information; and
obtaining the first route based on the BGP message.

17. The method according to claim 16, wherein the first indication information further indicates that the first NLRI comprises a second field in the second field set.

18. The method according to claim 17, wherein the obtaining the first route based on the BGP message comprises:
parsing the BGP message to obtain the first field set and the first indication information;
obtaining the first route when the first indication information indicates that the first NLRI does not comprise the second field set, wherein the first route comprises routing information carried in each field in the first field set; or
obtaining the first route when the first indication information indicates that the first NLRI further comprises the second field in the second field set, wherein the first route comprises routing information carried in each field in the first field set and routing information carried in the second field.

19. The method according to any one of claims 16 to 18, wherein the first indication information comprises a plurality of bits, and the first indication information indicates, in a bit mapping manner, that the first NLRI does not comprise the first field.

20. The method according to any one of claims 16 to 18, wherein the first indication information indicates, in an enumeration manner, that the first NLRI does not comprise the first field.

21. The method according to any one of claims 16 to 20, wherein the BGP message comprises a plurality of pieces of NLRI, the plurality of pieces of NLRI comprise the first NLRI and second NLRI, and the BGP message comprises a common information field and a plurality of dedicated information fields, wherein the common information field carries same information of the plurality of pieces of NLRI, the plurality of dedicated information fields are in a one-to-one correspondence with the plurality of pieces of NLRI, each of the plurality of dedicated information fields carries information other than the same information of each of the plurality of pieces of NLRI.

22. The method according to claim 21, wherein the BGP message comprises third NLRI, wherein the third NLRI comprises the common information field and the dedicated information fields, and the plurality of pieces of NLRI are a plurality of pieces of sub-NLRI in the third NLRI.

23. The method according to any one of claims 16 to 22, wherein the first route is a first Ethernet virtual private network EVPN route, and the first NLRI is first EVPN NLRI.

24. The method according to claim 23, wherein an encoding format of the first EVPN NLRI is different from an encoding format of EVPN NRLI defined in RFC 7432.

25. The method according to claim 23 or 24, wherein the first EVPN NLRI comprises a route type field, and the first EVPN route indicated by the route type field is:
a compressed media access control/internet protocol advertisement route MAC/IP Advertisement Route;
a compressed IP prefix route;
a compressed Ethernet auto-discovery route Ethernet Auto-discovery Route;
a compressed inclusive multicast Ethernet tag route Inclusive Multicast Ethernet Tag Route; or
a compressed Ethernet segment route Ethernet Segment Route.

26. The method according to claim 25, wherein when the first EVPN route is the compressed MAC/IP advertisement route, the necessary routing information comprises a route type, a specific routing information length, a route identifier, a MAC address length, a MAC address, a layer 2 multi-protocol label switching label MPLS label1, and an IP address length.

27. The method according to claim 26, wherein the necessary routing information further comprises an internet protocol version 4 IPv4 address or an internet protocol version 6 IPv6 address.

28. The method according to any one of claims 25 to 27, wherein when the first EVPN route is the compressed MAC/IP advertisement route, the optional routing information comprises an Ethernet segment identifier and an Ethernet tag identifier.

29. The method according to claim 28, wherein the optional routing information further comprises an MPLS label2.

30. The method according to claim 25, wherein when the first EVPN route is the compressed IP prefix route, the necessary routing information comprises a route type, a specific routing information length, a route identifier, an IP prefix length, an IP prefix, and an MPLS label.

31. The method according to claim 30, wherein the optional routing information comprises an Ethernet segment identifier, an Ethernet tag identifier, and a gateway IP address.

32. An apparatus for transmitting network layer reachability information NLRI, wherein the apparatus comprises a processing unit and a transceiver unit, wherein
the transceiver unit is configured to implement a sending operation performed by the first communication apparatus in the method according to any one of claims 1 to 15; and
the processing unit is configured to implement another operation other than the sending operation performed by the first communication apparatus in the method according to any one of claims 1 to 15.

33. An apparatus for transmitting network layer reachability information NLRI, wherein the apparatus comprises a processing unit and a transceiver unit, wherein
the transceiver unit is configured to implement a sending operation performed by the first communication apparatus in the method according to any one of claims 16 to 31; and
the processing unit is configured to implement another operation other than the sending operation performed by the first communication apparatus in the method according to any one of claims 16 to 31.

34. A device for transmitting network layer reachability information NLRI, comprising a memory, a processor, and a computer program stored in the memory, wherein when the processor performs the computer program, the device is enabled to implement the method according to any one of claims 1 to 31.

35. A system for transmitting network layer reachability information NLRI, comprising the apparatus according to claim 32 and the apparatus according to claim 33.

36. A computer storage medium, storing a computer program, wherein when the computer program is performed by a processor, the method according to any one of claims 1 to 31 is implemented.

37. A computer program product, comprising a computer program, wherein when the computer program is performed by a processor, the method according to any one of claims 1 to 31 is implemented.
